# EUROPEAN PATENT SPECIFICATION

(11) **EP 2 468 086 B1**
(45) Date of publication and mention of the grant of the patent: **21.08.2013**
(21) Application number: 11159410.7
(22) Date of filing: 23.03.2011
(51) Int. Cl.: A01D 43/063

(54) **Mower and method of detaching a collector of the mower**
Mäher und Verfahren zum Entfernen eines Sammelbehälters von einem Mäher
Tondeuse et procédé de détachement d'un collecteur de tondeuse

(30) Priority: 24.12.2010 JP 2010287941
(43) Date of publication of application: 27.06.2012
(73) Proprietor: ISEKI & CO., LTD., Ehime 799-2692 (JP)
(72) Inventor: Yoshiki, Shinya, Iyo-gun Ehime 791-2193 (JP); Enomoto, Wakao, Iyo-gun Ehime 791-2193 (JP); Okamoto, Suguru, Iyo-gun Ehime 791-2193 (JP)
(74) Representative: Grünecker, Kinkeldey, Stockmair & Schwanhäusser

(56) References cited:
- EP-A1- 0 405 090
- DE-A1-102009 001 708
- US-A- 6 050 072
- US-B1- 6 595 737

## Description

### BACKGROUND OF THE INVENTION

### Field of the Invention

The present invention relates to a mower and a method of detaching a collector of the mower.

### Related art of the Invention

A mower in accordance with the preamble of claim 1 including a collector into which mowed grass is collected, in a rear part of a mower main body is known for example, from DE-A-10 2009 601 708, which corresponds to Japanese Patent Laid-Open No. 2010-166826 .

In the mower as described above, grass which is mowed by a mowing part provided below the mower main body moves to a rear side of the mower main body, passes through an opening part formed in the collector, and is housed in the collector. On the other hand, when the grass is discharged from the collector, a lock of the collector with the mower main body is released, whereby the collector is turned upward by a pressing force of a damper. Therefore, the opening part faces downward, and the grass falls to be discharged.

In addition, a configuration using an electric-powered cylinder at the time of turning the collector upward has been disclosed (see, for example, Japanese Patent Laid-Open No. 2010-172241).

However, when cleaning of the collector and maintenance of the rear part of the mower main body are performed, it is necessary to detach the collector from the mower main body. In the mower disclosed in Japanese Patent Laid-Open No. 2010-166826, when the lock is released, the collector turns upward, and in this turn state, it is difficult for a worker to detach the collector.

In addition, in the mower disclosed in Japanese Patent Laid-Open No. 2010-172241, because the electric-powered cylinder is used, the collector can be held at a position at which the lock is released, and the detachment of the collector is easy. However, because the electric-powered cylinder is used, the structure is complicated, and costs are increased.

In view of the above-mentioned problems of the conventional mowers, the present invention has an object to provide a mower having a simple configuration in which a collector is easily attached and detached, and a method of detaching the collector of the mower.

### SUMMARY OF THE INVENTION

To achieve the above object, the 1^{st} aspect of the present invention is a mower that has a mower main body (2) and a collector (9) which is detachably provided to a rear part of the mower main body (2) and into which mowed grass is collected, comprising:
a fixing mechanism (47, 48, 50) which fixes the collector (9) to a grass collecting position for collecting the grass, when the grass is mowed;
a fixing releasing mechanism (30, 32, 31, 41, 51b, 51a, 55, 54, 49, 56, 57, 58, 59, 60) which releases the fixing;
a lifting part (65) which lifts the collector (9) from the grass collecting position to a discharge position for discharging the collected grass, when the fixing is released; and
a holding member (400) which is capable of holding, against the lifting, the collector (9) at a holding position in a vicinity of the grass collecting position, when the fixing is released,
wherein the collector is (9) configured to be detachable from the rear part of the mower main body (2) in a state where the collector (9) is at the holding position.

This prevents the collector from moving to the discharge position, and thus enables the collector to be easily attached to and detached from the mower main body.

The 2^{nd} aspect of the present invention is the mower according to the 1^{st} aspect of the present invention, wherein:
the mower main body (2) includes a supporting part (24, 25, 250) coupled to a rear end thereof;
the collector (9) is detachably supported by the supporting part (24, 25, 250);
the lifting part (65) lifts and moves the supporting part(24, 25, 250), to thereby lift and move the collector (9) to the discharge position; and
the holding member (400) couples a mower main body portion (2) of the mower main body other than the supporting part (24, 25, 250) and the supporting part (24, 25, 250) to each other, to thereby hold the collector (9) at the holding position.

This makes it possible to hold the collector at the holding position with a simple operation.

The 3^{rd} aspect of the present invention is the mower according to the 2^{nd} aspect of the present invention, wherein:
the holding member (400) is a member having a stiffness property, and includes an engagement part;
one end of the holding member (400) is turnably coupled to one of the mower main body portion and the supporting part (24,25,250) ; and
an engaged part (800) to be engaged with the engagement part (400) is formed in another one of the mower main body portion and the supporting part (24,25,250).

This makes it possible to hold the collector at the holding position with a simple configuration.

The 4^{th} aspect of the present invention is the mower according to the 3^{rd} aspect of the present invention, wherein:
the holding member is a bar-like member which is long in a front-back direction, and has an elongated hole (430) which is formed along a longitudinal direction thereof;
the engagement part has a holding hole (431) which is formed between both edges of the elongated hole (430) so as to be connected with the elongated hole (430);
the holding member (400) moves so that the engaged part (800) slides along the elongated hole (430) , as the collector (9) is lifted from the grass collecting position to the discharge position; and
the collector (9) is held at the holding position by placing the engaged part (800) in the holding hole (431).

This makes it possible to hold the collector at the holding position more reliably.

The 5^{th} aspect of the present invention is the mower according to the 3^{rd} or the 4^{th} aspect of the present invention, wherein the holding member (400) includes a handle part (420) provided at another end thereof.

This enables an operation with the handle part being gripped, and thus makes it possible to further facilitate the operation of holding the collector at a position in the vicinity of the grass collecting position.

The 6^{th} aspect of the present invention is the mower according to any one of the 2^{nd} to the 5^{th} aspect of the present invention, wherein:
the collector (9) includes an opening part (G) through which the grass comes in and out;
the grass collecting position is a position at which the opening part (G) is substantially perpendicular to a ground;
the discharge position is a position at which the opening part (G) is substantially parallel to the ground;
the holding position is a position at which the opening part (G) is inclined to the ground by a predetermined amount decided by the holding member, and
the supporting part (24, 25, 250) is lifted and turned by the lifting part (65) about a horizontal axis of the mower main body portion while supporting the collector (9).

This prevents the collector from turning upward from the holding position to the discharge position, and thus enables the collector to be easily attached to and detached from the mower main body.

The 7^{th} aspect of the present invention is a method of detaching a collector (9) of a mower, in which the collector (9) is detached from the mower,
the mower, comprising:
a fixing mechanism (47, 48, 50) which fixes the collector (9) to a grass collecting position for collecting grass, when the grass is mowed;
a fixing releasing mechanism (30, 32, 31, 41, 51b, 51a, 55, 54, 49, 56, 57, 58, 59, 60) which releases the fixing;
a lifting part (65) which lifts the collector (9) from the grass collecting position to a discharge position for discharging the collected grass, when the fixing is released; and
a holding member (400) which is capable of holding, against the lifting, the collector (9) at a holding position in a vicinity of the grass collecting position, when the fixing is released,
the collector being configured to be detachable from a rear part of a mower main body (2) in a state where the collector (9) is at the holding position, and
the method of detaching the collector of the mower, comprising:
   a fixing releasing step of releasing the fixing;
   a holding step of setting the holding member; and
   a detaching step of detaching the collector from the mower main body.

This prevents the collector from moving to the discharge position, and thus enables the collector to be easily attached to and detached from the mower main body.

### BRIEF DESCRIPTION OF THE DRAWINGS

FIG.1 is a left-side configuration view illustrating a state where a mower mows grass according to Embodiment 1 of the present invention;
FIG. 2 is a planar configuration view illustrating a state where a floor of the mower is detached according to Embodiment 1 of the present invention;
FIG. 3 is a left-side configuration view illustrating a state where a collector of the mower is placed at a grass collecting position according to Embodiment 1 of the present invention;
FIG. 4 is a perspective configuration view illustrating the collector of the mower according to Embodiment 1 of the present invention;
FIG. 5 is a left-side configuration view illustrating the state where the collector of the mower is placed at the grass collecting position according to Embodiment 1 of the present invention;
FIG. 6 is a right-side configuration view illustrating the state where the collector of the mower is placed at the grass collecting position according to Embodiment 1 of the present invention;
FIG. 7 is a left-side configuration view illustrating a state where the grass is discharged from the mower according to Embodiment 1 of the present invention;
FIG. 8 is an enlarged perspective configuration view illustrating a vicinity of a rear end part of a mower main body according to Embodiment 1 of the present invention;
FIG. 9 is a left-side configuration view illustrating a state where the collector of the mower is placed at a discharge position according to Embodiment 1 of the present invention;
FIG. 10(A) is a left-side configuration view illustrating a state of a holding member when the collector of the mower is placed at the grass collecting position according to Embodiment 1 of the present invention, and FIG. 10(B) is a left-side configuration view illustrating a state of the holding member when the collector of the mower is placed at the discharge position according to Embodiment 1 of the present invention;
FIG. 11 (A) is a left-side configuration view illustrating the state of the holding member when the collector of the mower is placed at the grass collecting position according to Embodiment 1 of the present invention, and FIG. 11(B) is a left-side configuration view illustrating a state of the holding member when the collector of the mower is placed at a holding position according to Embodiment 1 of the present invention;
FIG. 12 is a left-side configuration view illustrating a state where the collector of the mower is placed at the holding position according to Embodiment 1 of the present invention;
FIGS. 13(A) to 13(C) are left-side partial configuration views for describing an operation of detaching the collector of the mower from the mower main body according to Embodiment 1 of the present invention;
FIG. 14 is a left-side configuration view illustrating a state where a lower rear part of the collector of the mower is hitting against an obstacle according to Embodiment 1 of the present invention;
FIG. 15 is a left-side configuration view illustrating a modified example of the mower according to Embodiment 1 of the present invention;
FIG. 16 is a left-side configuration view illustrating a modified example of the mower according to Embodiment 1 of the present invention;
FIG. 17 is a left-side configuration view illustrating a mower according to Embodiment 2 of the present invention;
FIG. 18 is an enlarged perspective configuration view illustrating a vicinity of a rear end part of a mower main body according to Embodiment 2 of the present invention;
FIG. 19 is a left-side configuration view illustrating a state where a collector of the mower is placed at a holding position according to Embodiment 2 of the present invention;
FIG. 20 is a left-side configuration view illustrating a modified example of the mower according to Embodiment 2 of the present invention;
FIG. 21 is a right-side configuration view illustrating a state where a mower unit of a mower is placed at a grass mowing position according to Reference Example 1 of an invention relating to the present invention;
FIG. 22 is a planar configuration view illustrating the mower according to Reference Example 1 of the invention rotating to the present invention;
FIG. 23 is a front configuration view illustrating the mower according to Reference Example 1 of the invention relating to the present invention;
FIG. 24 is a right-side configuration view illustrating a state where the mower unit of the mower is placed at a retracted position according to Reference Example 1 of the invention relating to the present invention;
FIG. 25 is a planar configuration view illustrating a frame of the mower according to Reference Example 1 of the invention relating to the present invention;
FIG. 26 is a right-side configuration view illustrating the frame of the mower according to Reference Example 1 of the invention relating to the present invention;
FIG. 27 is a rear-side configuration view illustrating the frame of the mower according to Reference Example 1 of the invention relating to the present invention;
FIG. 28 is a perspective configuration view illustrating a vicinity of a second turning arm on a left side surface of the mower according to Reference Example 1 of the invention relating to the present invention;
FIG. 29 is a perspective partial configuration view illustrating a right side surface of the mower according to Reference Example 1 of the invention relating to the present invention;
FIG. 30(A) is a planar configuration view illustrating a cam of the mower according to Reference Example 1 of the invention relating to the present invention, FIG. 30(B) is a side configuration view illustrating the cam of the mower according to Reference Example 1 of the invention relating to the present invention, and FIG. 30(C) is a bottom configuration view illustrating the cam of the mower according to Reference Example 1 of the invention relating to the present invention;
FIG. 31 is an exploded configuration view illustrating a positioning part of the mower according to Reference Example 1 of the invention relating to the present invention;
FIG. 32 is a configuration view illustrating a cross section taken along X-X' in FIG. 31;
FIG. 33 is a right-side partial configuration view for describing adjustment of a grass mowing position of the mower according to Reference Example 1 of the invention relating to the present invention;
FIG. 34 is a right-side partial configuration view for describing the adjustment of the grass mowing position of the mower according to Reference Example 1 of the invention relating to the present invention;
FIG. 35 is a right-side partial configuration view for describing the adjustment of the grass mowing position of the mower according to Reference Example 1 of the invention relating to the present invention;
FIG. 36 is a right-side partial configuration view for describing the adjustment of the grass mowing position of the mower according to Reference Example 1 of the invention relating to the present invention;

### PREFERRED EMBODIMENTS OF THE INVENTION

Hereinafter, a description is given of a mower according to embodiments of the present invention.

### (Embodiment 1)

Hereinafter, a description is given of a mower according to Embodiment 1 of the present invention.

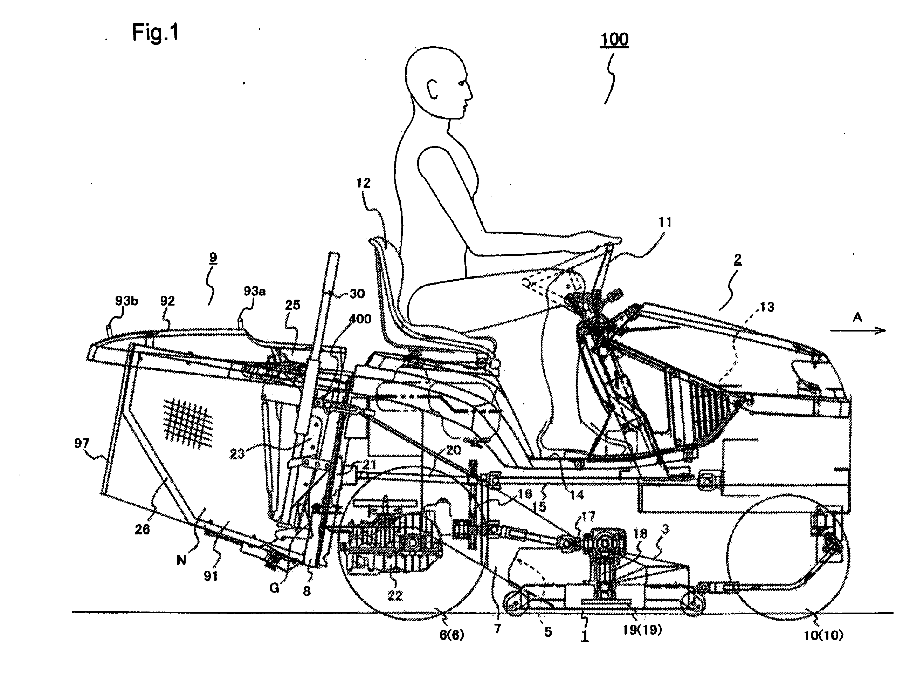

FIG.1 is a side configuration view illustrating a mower 100 according to Embodiment 1. Then, herein, a front direction corresponds to a direction of movement when grass is mowed (see the arrow A), and a left-right direction corresponds to a direction when the mower is viewed from a front surface (front side) thereof. The same applies to the following drawings.

As illustrated in FIG.1, the mower 100 of Embodiment 1 is a riding-type mower, and includes: a mower main body 2 on which a worker is seated; and a collector 9 which is provided in a rear part of the mower main body 2 and into which mowed grass is collected. In the mower 100 of Embodiment 1, grass which is mowed by a mower unit 1 for mowing grass provided below the mower main body 2 is sent to the collector 9 in the rear part, so that the mowed grass is collected.

First, a description is given of a configuration of the mower main body 2.

The mower main body 2 has four wheels, that is, two front wheels 10 and two rear wheels 6. Then, the mower main body 2 is provided with a steering wheel 11 which operates the front wheels 10, a driver's seat 12 on which a worker is seated, an engine 13 which drives the wheels, and a floor 14 of the driver's seat 12.

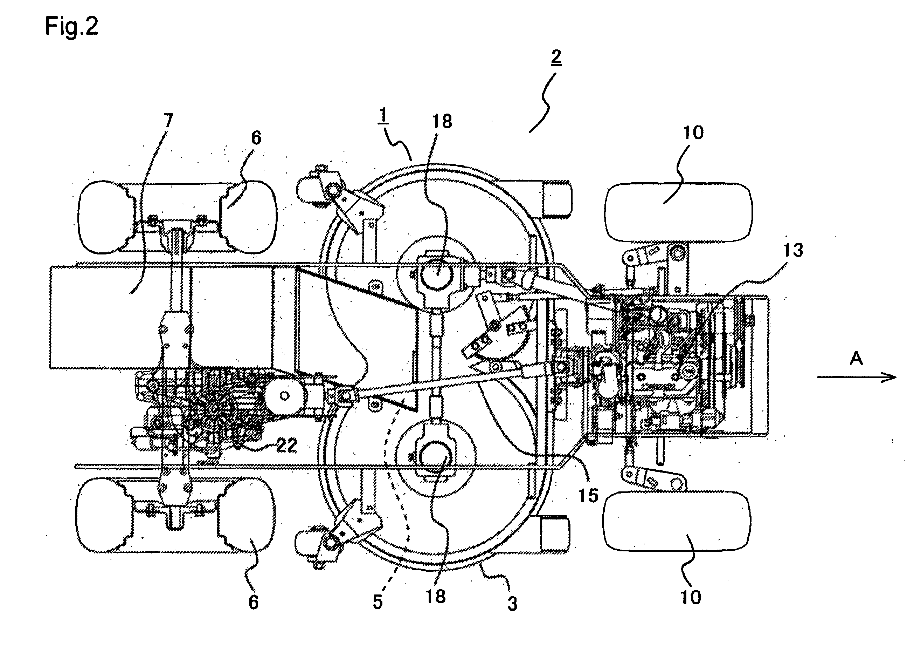

FIG. 2 is a plan view illustrating a state where the floor 14 of the mower main body 2 and the collector 9 are detached.

As illustrated in FIG.1 to FIG. 4, below the floor 14, a power extraction shaft 15 is provided in a front-back direction, for extracting an output of the engine 13. The power extraction shaft 15 is coupled to an input shaft 17 for inputting the power to the mower unit 1, via a power transmission belt 16.

On the other hand, the mower unit 1 includes: a mower deck 3; blade shafts 18 provided at right and left end parts thereof; and blades 19 which are fixed to the respective blade shafts 18, and rotate about longitudinal axis centers thereof. The blade shafts 18 are rotated by the power transmitted by the input shaft 17, so that the right and left blades 19 rotate. Then, the right and left blades 19 rotate in reverse directions to each other, whereby the grass is mowed efficiently.

In addition, a driving power transmission shaft 20 is provided so as to be coupled to a rear side of the power extraction shaft 15, and power of the driving power transmission shaft 20 is transmitted to the rear wheels 6 via a power transmission case 21 and a hydraulic static transmission (HST) 22, so that the rear wheels 6 are driven.

A grass collecting port 5 is formed on a central rear side of the mower deck 3, and the grass collecting port 5 is communicated with the collector 9 attached to a rear frame 8, via a duct 7 provided between the right and left rear wheels 6.

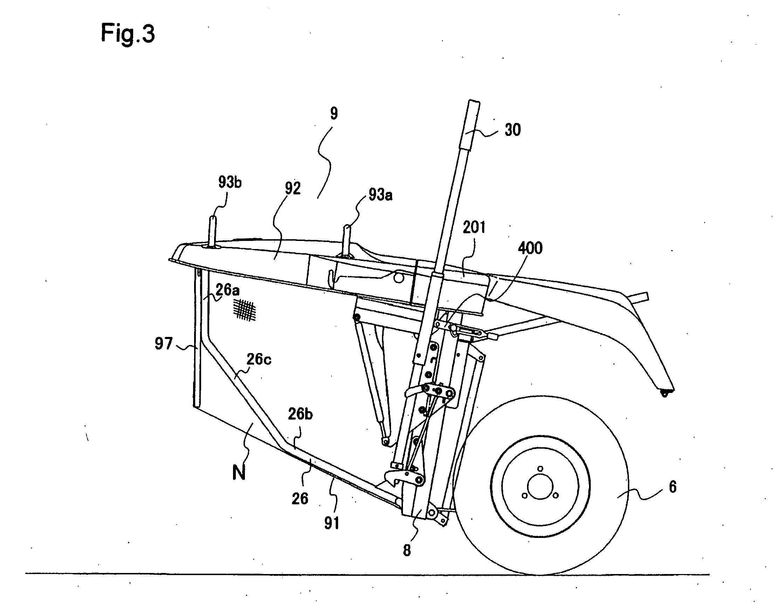

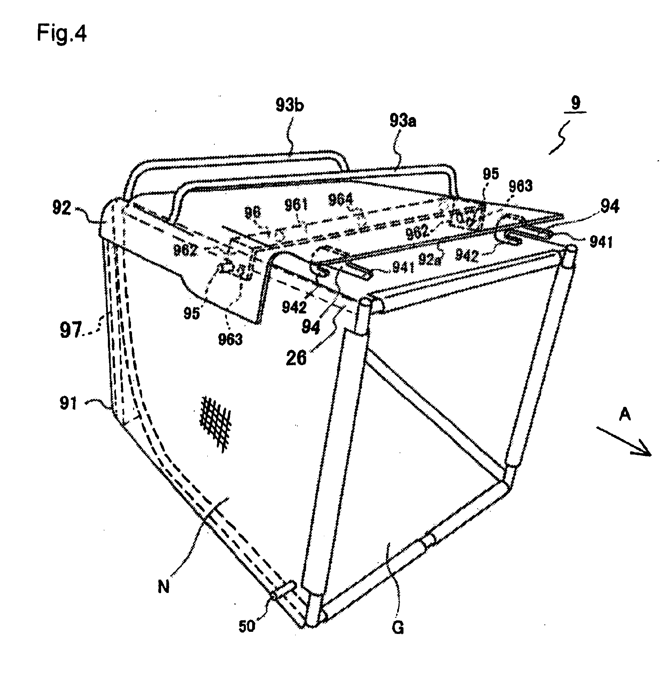

Next, a description is given of a configuration of the collector 9. FIG. 3 is a left-side configuration view illustrating a rear part of the mower 100. Moreover, FIG. 4 is a perspective configuration view illustrating the collector 9.

As illustrated in FIG. 3 and FIG. 4, the collector 9 includes: a container part 91 having a substantially box-like shape, into which grass is collected; and a cover part 92 which is provided above the container part 91. Two handles 93a, 93b are provided. Handles 93a and 93b are provided at front and back points on the cover part 92. In addition, the container part 91 is formed into the box-like shape by a net frame 26, and upper and lower surfaces, right and left surfaces, and a rear surface thereof are covered by a ventilation net N. A front surface of the collector 9 is not covered by the ventilation net N, and an opening part G is formed. Moreover, in the state illustrated in FIG. 3, a corner is not formed in side view in a lower rear end part of the net frame 26 of the collector 9, and, an oblique frame 26c is formed obliquely from a rear vertical frame 26a constituting the rear surface toward a bottom horizontal frame 26b constituting the bottom surface. In addition, a plate-like flexible elastic member 97 is detachably provided between the rear vertical frame 26a and the ventilation net N on the rear surface of the collector 9.

Further, as illustrated in FIG. 4, a hook part 94 is provided in each of the vicinities of right and left front ends between the container part 91 and the cover part 92. The hook part 94 includes an upper protruding part 941 and a lower protruding part 942 placed vertically. The upper protruding part 941 is formed so as to be longer toward the front than the lower protruding part 942, and a front part of the upper protruding part 941 protrudes from a front end 92a of the cover part 92.

In addition, a fixing member 96 is provided for fixing the cover part 92 and the container part 91 to each other, and has an upside down U shape. The fixing member 96 includes: a cover attachment portion 961 which is provided in the left-right direction on an inner surface of the cover part 92; and container attachment portions 962 which are bent downward from both ends thereof. In the fixing member 96, the cover attachment portion 961 is fixed to the cover part 92 by a bolt 964, and the container attachment portions 962 that are bent parts of the fixing member 96 are fixed to the net frame 26 by bolts 963. Then, pins 95 are formed on the container attachment portions 962 that are bent parts of both ends of the fixing member 96 so as to erect outward.

Next, a description is given of a configuration in which the collector 9 described above is attached to the mower main body 2.

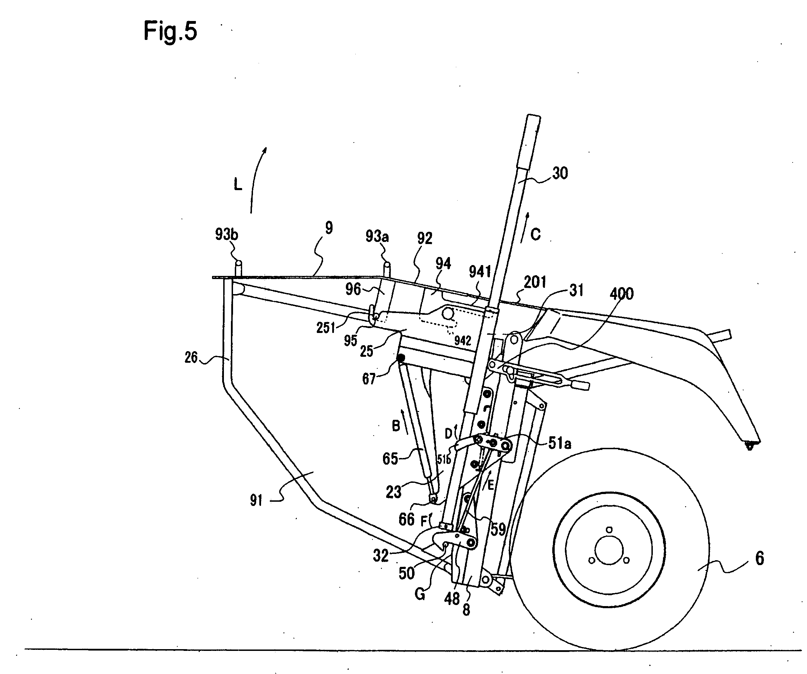

FIG. 5 is a view schematically illustrating the vicinity of the rear part of the mower main body 2 on the left side surface of the mower 100, in which side surface portions of the cover part 92 and a rear cover 201 of the mower main body 2 are omitted for ease of description. In addition, in FIG. 5, the flexible elastic member 97 and the ventilation net N are also omitted.

As illustrated in FIG. 5, the rear frame 8 is provided in a rear end part of the mower main body 2, and the collector 9 is attached thereto via an attachment bracket 23, a turning plate 25, and a collector turning shaft 24. The attachment bracket 23 is fixed to the rear frame 8, and has an upper part which supports the collector turning shaft 24 as a horizontal shaft center serving as a turning shaft of the collector 9.

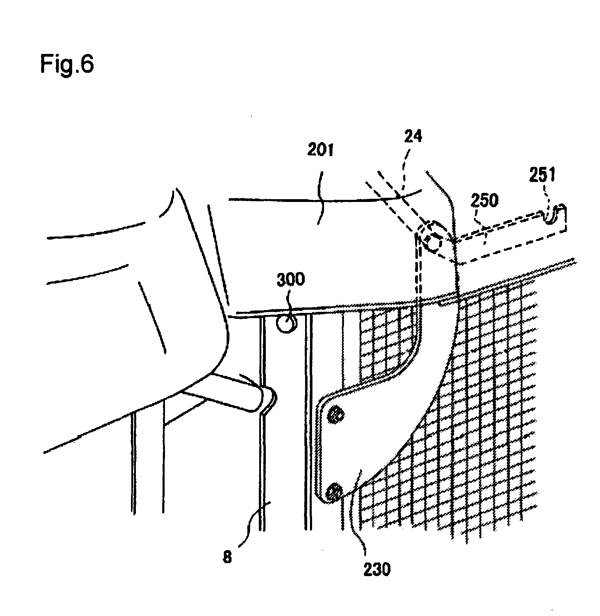

FIG. 6 is a perspective view illustrating the vicinity of the rear part of the mower main body 2 on the right side surface of the mower 100 according to the present embodiment. As illustrated in FIG. 6, an attachment bracket 230 corresponding to the attachment bracket 23 on the left side surface is provided to the rear frame 8 on the right side surface. The collector turning shaft 24 is tumably supported by the upper parts of the attachment bracket 230 and the attachment bracket 23 in a rotatable manner. In addition, a turning plate 250 corresponding to the turning plate 25 on the left side surface is also provided. The turning plates 25 and 250 are fixed to the collector turning shaft 24, and when the collector turning shaft 24 turns, the turning plates 25 and 250 turn integrally therewith. Then, that the collector turning shaft 24 may be fixed to the attachment brackets 23 and 230, and only the turning plates 25 and 250 may turn.

In addition, a concave part 251 opened upward is formed in each of rear end parts of the turning plates 25 and 250. Then, the collector turning shaft 24 is sandwiched between the upper protruding part 941 and the lower protruding part 942 of the hook part 94 of the collector 9, and the pin 95 is fitted into the concave part 251, whereby the collector 9 is attached to the mower main body 2.

Further, as illustrated in FIG. 6, a cleaning bar housing hole 300 through which a cleaning bar for removing grass can be housed is formed in an upper part of the rear frame 8. Then, in FIG. 6, the hook part 94, the pin 95, and the like are not illustrated for easier view of the drawing.

In the state where the collector 9 is placed as illustrated in FIG. 1 and FIG. 5, mowing is performed, and the grass mowed by the mower unit 1 is housed in the collector 9 via the duct 7 and the opening part G. This position of the collector 9 in the case of moving grass is referred to as a grass collecting position. That is, at the grass collecting position, the collector 9 is placed so that the opening part G thereof is substantially perpendicular to the ground. "Substantially perpendicular" in this case means that the opening part G is perpendicular thereto within a range within which the grass can be collected.

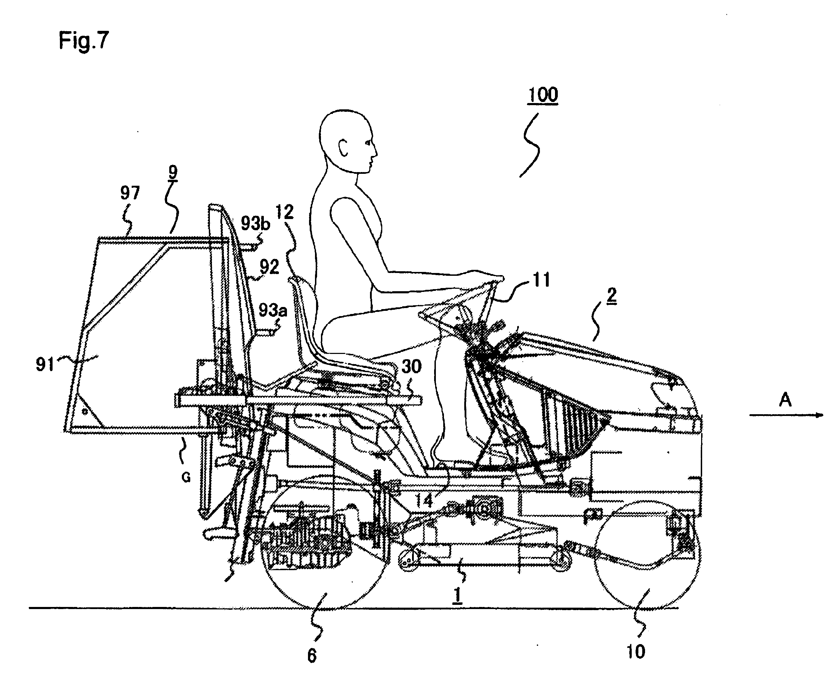

In addition, the grass which is housed in the collector 9 in this way is discharged by turning the collector 9 about the collector turning shaft 24. FIG. 7 is a left-side configuration view of the mower, illustrating the state where the grass is discharged. This position of the collector 9 in the case of discharging the grass is referred to as a discharge position. At the discharge position, the collector 9 is placed so that the opening part G thereof is substantially parallel to the ground. "Substantially parallel" in this case means that the opening part G is parallel thereto within a range within which the grass can be discharged. Then, the mower unit 1 is separated upward from the ground at this time.

Next, a description is given of a mechanism in which the collector 9 is fixed to the grass collecting position.

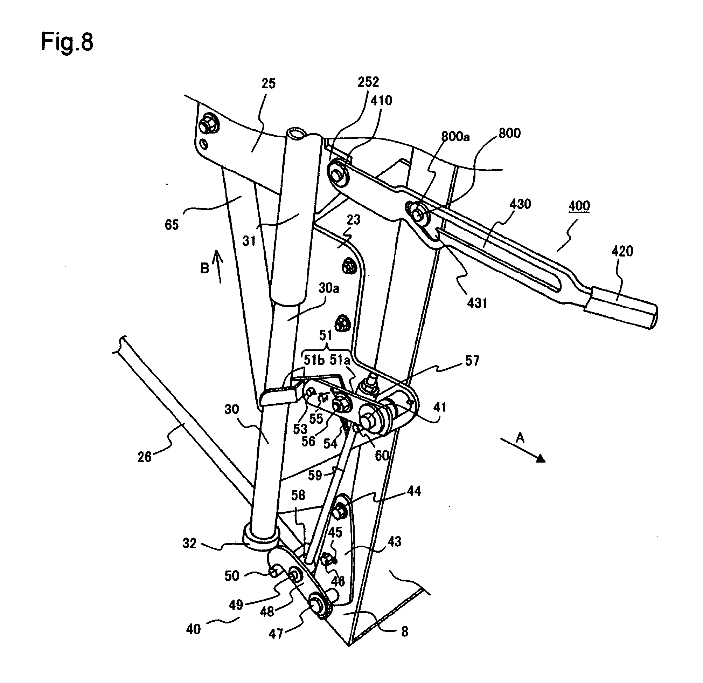

FIG. 8 is a side configuration view illustrating the vicinity of the rear end of the mower main body 2. In the present embodiment, a locking mechanism 40 is provided below the attachment bracket 23. The locking mechanism 40 includes a hook plate 43 which is supported by the rear frame 8 by means of a tightening bolt 44, and the hook plate 43 is configured to be turnable in the front-back direction with respect to the tightening bolt 44 as a supporting shaft. An elongated hole 45 is formed in the hook plate 43 in the front-back direction. Then, an adjusting bolt 46 is inserted through the elongated hole 45, and a front-back angle of the hook plate 43 can be adjusted with respect to the rear frame 8, to thereby fix the hook plate 43 to the rear frame 8.

A lock hook 48 is provided in a lower end part of the hook plate 43, and the lock hook 48 is supported by a hook shaft 47 so as to be vertically turnable. On the other hand, a lock pin 50 is provided to the net frame 26 in a lower front part of the collector 9. When the lock hook 48 is hooked on the lock pin 50, the collector 9 is restricted from turning about the collector turning shaft 24, so that the collector 9 can be fixed to the grass collecting position.

Next, a description is given of a mechanism in which the fixing of the collector 9 at the grass collecting position is released.

As illustrated in FIG. 5, a turn operation lever 30 for performing a turn operation of the collector 9 and a holding pipe 31 which slidably holds the turn operation lever 30 in a longitudinal direction thereof are provided in the left front part of the collector 9. In the case where the collector 9 is placed at the grass collecting position, the turn operation lever 30 is placed so as to be horizontally slidable, and as illustrated in FIG. 8, an engagement ring 32 having a diameter larger than that of the lever is provided in a lower end part of the turn operation lever 30.

The attachment bracket 23 is provided with a swinging arm 51 which is vertically turnable with respect to a supporting shaft 41. The swinging arm 51 includes: a swinging arm main body 51a attached to the supporting shaft 41; and an engagement lever 51b coupled to a rear end part of the swinging arm main body 51a. The engagement lever 51b is configured to be vertically turnable with respect to a lever pin 53 which erects from the swinging arm main body 51a. Further, a return spring 54 is provided for coupling a front side of the engagement lever 51b from the lever pin 53 and a portion of the attachment bracket 23 located therebelow to each other, and a rear end side of the engagement lever 51b is urged upward by the return spring 54. In addition, a stopper 55 for stopping the upward urging of the rear end side of the engagement lever 51b is provided inside of the swinging arm main body 51a. In the state where the engagement lever 51b abuts against the stopper 55, the swinging arm main body 51a and the engagement lever 51b are integrally pulled downward with respect to the supporting shaft 41 by an urging force of the return spring 54. Then, a stopper 60 for restricting the swinging arm 51 from turning downward more than a predetermined degree is provided below the swinging arm main body 51a.

The engagement lever 51b is branched into two parts on the rear end side thereof, and a distance between the branched two parts is formed so as to be larger than a diameter of a lever rod part 30a of the turn operation lever 30 and smaller than a diameter of the engagement ring 32.

Then, in the state where the engagement lever 51b is positioned above the engagement ring 32 of the turn operation lever 30 and sandwiches right and left sides of the turn operation lever 30, if the turn operation lever 30 is pulled up to thereby engage the engagement ring 32 with the engagement lever 51b, the swinging arm main body 51a and the engagement lever 51b which are integrated with each other by the return spring 54 and the stopper 55 turn upward about the supporting shaft 41.

A link rod 59 is provided for coupling the swinging arm 51 and the lock hook 48 to each other. The link rod 59 couples: a coupling boss 57 which is tumably coupled to a coupling pin 56 of the swinging arm main body 51a; and a coupling boss 58 which is tumably coupled to a coupling pin 49 of the lock hook 48, to thereby couple the swinging arm 51 and the lock hook 48 to each other. With such a configuration, when the swinging arm 51 vertically turns with respect to the supporting shaft 41, the lock hook 48 vertically turns with respect to the hook shaft 47, whereby the lock hook 48 is engaged with or unhooked from the lock pin 50 of the collector 9.

Next, a description is given of a configuration in which the collector 9 is turned from the grass collecting position to the discharge position.

As illustrated in FIG. 5, a damper 65 is provided for coupling a lower rear end part of the attachment bracket 23 and the turning plate 25 to each other. The damper 65 has both ends which are attached to a pin 66 formed in the attachment bracket 23 and a pin 67 formed in the turning plate 25. The damper 65 expands and contracts together with the turning of the collector 9, and urges the collector 9 in an upward direction (the arrow B direction in the figures).

When the lock hook 48 is unhooked from the lock pin 50 by the urging force of the damper 65, the collector 9 turns upward about the collector turning shaft 24.

Next, a description is given of a configuration in which the collector 9 is fixed to a position (referred to as holding position) in the vicinity of the grass collecting position.

As illustrated in FIG. 8, a holding member 400 is provided for holding the collector 9 at the holding position against the urging force of the damper 65. The holding member 400 is a bar-like member which has a stiffness property and is long in the front-back direction, and a rear end part 410 thereof is tumably attached to a front-side part 252 of the turning plate 25 from the holding pipe 31. Moreover, a front end part of the holding member 400 is formed as a handle part 420 to be gripped by a user. An elongated hole 430 is formed in the holding member 400 along a longitudinal direction thereof, and a protruding part 800 fixed to an upper part of the rear frame 8 is fitted into the elongated hole 430. A leading end part 800a of the protruding part 800 is formed into a disk-like shape having a diameter larger than a vertical width of the elongated hole 430, which prevents the protruding part 800 from coming off the elongated hole 430. In addition, a holding hole 431 which is communicated with the elongated hole 430 and holds the collector 9 at the holding position is formed below a rear part of the elongated hole 430.

Although the details will be described later, the lock is released, and the protruding part 800 is placed in the holding hole 431, whereby the collector 9 can be held at the holding position against the urging force of the damper 65.

Then, an example of the fixing mechanism according to the present invention corresponds to the hook shaft 47, the lock hook 48, and the lock pin 50 according to the present embodiment, and an example of the fixing releasing mechanism according to the present invention corresponds to the turn operation lever 30, the engagement ring 32 thereof, the holding pipe 31, the supporting shaft 41, the engagement lever 51b, the swinging arm main body 51a, the stopper 55, the return spring 54, the coupling pins 49 and 56, the coupling bosses 57 and 58, the link rod 59, and the stopper 60 according to the present embodiment. An example of the lifting part according to the present invention corresponds to the damper 65 according to the present embodiment, and an example of the holding member according to the present invention corresponds to the holding member 400 according to the present embodiment. An example of the supporting part according to the present invention corresponds to the collector turning shaft 24 and the turning plates 25 and 250 according to the present embodiment. In addition, an example of the fixing pin according to the present invention corresponds to the lock pin 50 according to the present embodiment, and an example of the engagement member according to the present invention corresponds to the lock hook 48 according to the present embodiment. An example of the fixing releasing cam according to the present invention corresponds to the swinging arm 51 according to the present embodiment, and an example of the fixing releasing lever according to the present invention corresponds to the turn operation lever 30 according to the present embodiment. An example of the mower main body portion of the mower main body other than the supporting part according to the present invention corresponds to a portion of the mower main body 2 other than the collector turning shaft 24 and the turning plates 25 and 250 according to the present embodiment.

Next, a description is given of an operation of the mower according to the present embodiment.

As illustrated in FIG. 1, in the mower 100 of Embodiment 1, in the state where the collector 9 is placed at the grass collecting position, grass is mowed and air is blown by the rotation of the blades 19 of the mower unit 1, and the mowed grass is discharged and housed into the collector 9 via the duct 7 and the opening part G. Then, the air which transports the grass is discharged from the ventilation net N.

Then, when the mowed grass is discharged from the collector 9, in order to unhook the lock hook 48 engaged with the lock pin 50, the turn operation lever 30 is pulled upward by a worker along the holding pipe 31 (see the arrow C in FIG. 5). Then, in the state where the collector 9 is placed at the grass collecting position, if the turn operation lever 30 is not gripped by the worker, the turn operation lever 30 slides downward, and the lower end thereof abuts against the lock hook 48 to stop. This stop position is referred to as an initial position.

Describing with reference to FIG. 5, when the holding pipe 31 is pulled upward, the engagement ring 32 abuts against a lower end of the rear part of the engagement lever 51b, so that the engagement lever 51b is pulled upward together therewith. As a result, the swinging arm 51 turns upward about the supporting shaft 41 integrally with the engagement lever 51b (see the arrow D), and the link rod 59 also moves upward. The upward movement (see the arrow E) of the link rod 59 turns the lock hook 48 about the hook shaft 47 in the upward direction (see the arrow F), and the lock hook 48 is unhooked from the lock pin 50, so that the lock is released.

When the lock is released in this way, the collector 9 automatically turns upward about the collector turning shaft 24 by the urging force of the damper 65 (see the arrow L).

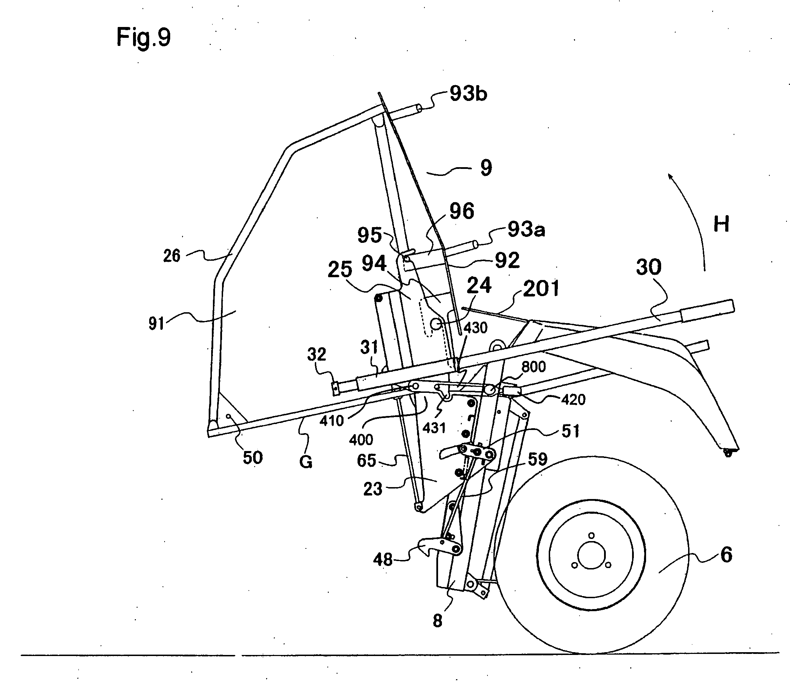

FIG. 9 is a view illustrating the state where the collector 9 is moved from the grass collecting position to the discharge position, compared with FIG. 5. As illustrated in FIG. 9, the collector 9 turns upward and moves to the discharge position at which the opening part G thereof is substantially parallel to the ground, whereby the grass falls downward to be discharged. A description is given of the state of the holding member 400 when the collector 9 moves from the grass collecting position to the discharge position as described above.

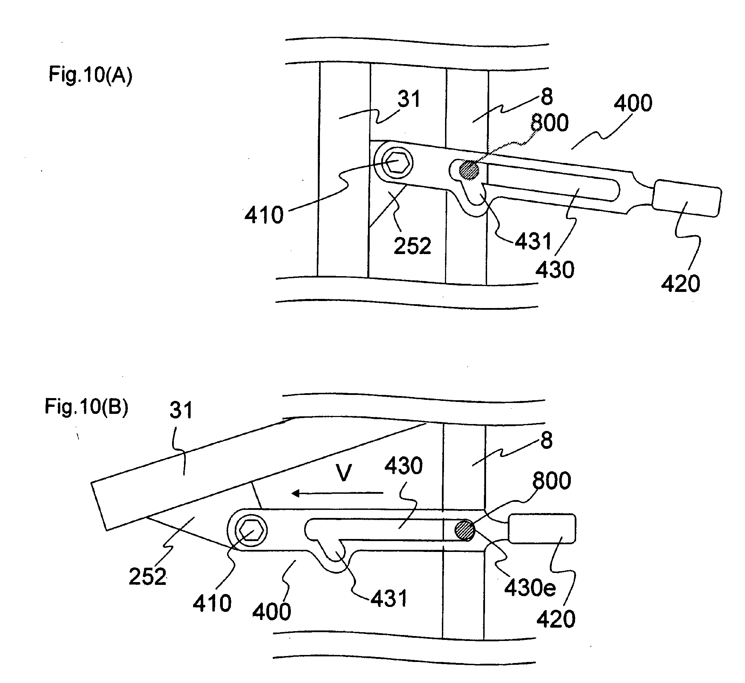

FIG. 10(A) is a partially enlarged schematic view for describing the state of the holding member 400 when the collector 9 is placed at the grass collecting position. FIG. 10(B) is a partially enlarged schematic view for describing the state of the holding member 400 when the collector 9 is placed at the discharge position. Then, in FIG. 10(A) and FIG. 10(B), the protruding part 800 is illustrated with the leading end part 800a being omitted.

As illustrated in FIG. 10(A), when the turning plate 25 is lifted and turned, because the rear end part 410 is coupled to the turning plate 25, as illustrated in FIG. 10(B), the holding member 400 slides rearward (see the arrow V) while being fitted with the protruding part 800. At this time, a front-side edge 430e of the elongated hole 430 abuts against the protruding part 800 to be engaged therewith, and the upward turn of the collector 9 stops.

Then, upon the release of the lock, the turn operation lever 30 turns, and the engagement ring 32 is separated from the engagement lever 51b. As a result, the engagement lever 51b and the swinging arm main body 51a turn downward about the supporting shaft 41 by the urging force of the return spring 54, and accordingly, the link rod 59 is pulled downward, so that the lock hook 48 returns to a lock position. The state as described above where the lock hook 48 is placed at the lock position without being engaged with the lock pin 50 is referred to as standby state.

Next, a description is given of an operation of returning the collector 9 to the grass collecting position.

When the collector 9 is to be returned from the discharge position to the grass collecting position, an upper part of the turn operation lever 30 is turned rearward (see the arrow H in FIG. 9) or the collector 9 is held and turned downward. When the collector 9 turns downward about the collector turning shaft 24 to reach the grass collecting position, the lock hook 48 which stands by at the lock position is engaged with the lock pin 50 while being retracted in a lock releasing direction (see the arrow F in FIG. 5), and thus is locked, so that the collector 9 is fixed to the grass collecting position. Then, when a worker pushes the turn operation lever 30 downward, the lower end of the turn operation lever 30 abuts against the lock hook 48, and the turn operation lever 30 returns to its initial position. Moreover, the turning plate 25 turns and moves downward, whereby the holding member 400 slides forward from the state of FIG. 10(B) to the state of FIG. 10(A).

Then, when the turn operation lever 30 is turned in the arrow H direction to thereby return the collector 9 to the grass collecting position, the lever rod part 30a of the turn operation lever enters the space between the branched two parts of the engagement lever 51b, and if the turn operation lever 30 is pulled upward to a large degree, the engagement ring 32 is positioned above the engagement lever 51b. In such a case, the turn operation lever 30 is slid downward, whereby the engagement lever 51b is pushed by the engagement ring 32 and is turned downward about the lever pin 53 to be retracted. Accordingly, the turn operation lever 30 can return to its initial position (see FIG. 8).

Next, a description is given of an operation of detaching the collector 9 from the mower main body 2, and an example of a method of detaching the collector of the mower according to the present invention is also described.

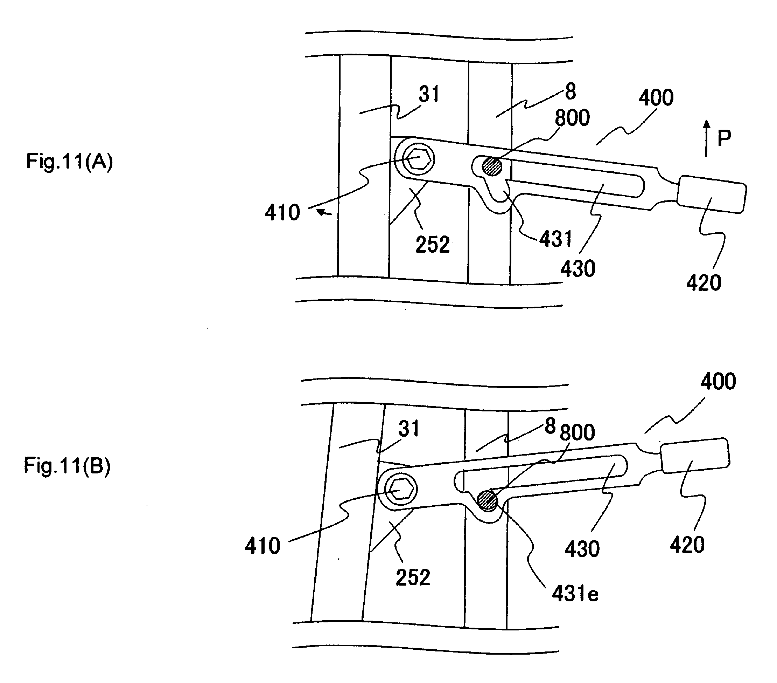

FIG. 11(A) is a main part enlarged schematic view illustrating the state of the holding member 400 in the case that the collector 9 is placed at the grass collecting position. FIG. 11 (B) is a main part enlarged schematic view illustrating the state of the holding member 400 in the case that the collector 9 is placed at the holding position. Then, similarly in FIG.11(A) and FIG.11(B), the protruding part 800 is illustrated with the leading end part 800a being omitted.

First, as illustrated in FIG.11(A), the turn operation lever 30 is pulled upward with the handle part 420 of the holding member 400 being lifted upward (see the arrow P). As a result, the engagement of the lock hook 48 with the lock pin 50 is released, and the collector 9 starts turning upward about the collector turning shaft 24 by the urging force of the damper 65. This operation of releasing the engagement corresponds to an example of the fixing releasing step according to the present invention.

At this time, the holding member 400 is lifted upward with respect to the rear end part 410, and hence the protruding part 800 is fitted into the holding hole 431. This operation of fitting the protruding part 800 into the holding hole 431 corresponds to an example of the holding step according to the present invention.

When the protruding part 800 is fitted into the holding hole 431 as described above, the protruding part 800 abuts against the edge 431e (see FIG. 11 (B)) of the holding hole 431. Therefore, the upward turn of the collector 9 stops, and the collector turning shaft 24 and the turning plates 25 and 250 are coupled to the portion of the mower main body 2 other than the collector turning shaft 24 and the turning plates 25 and 250.

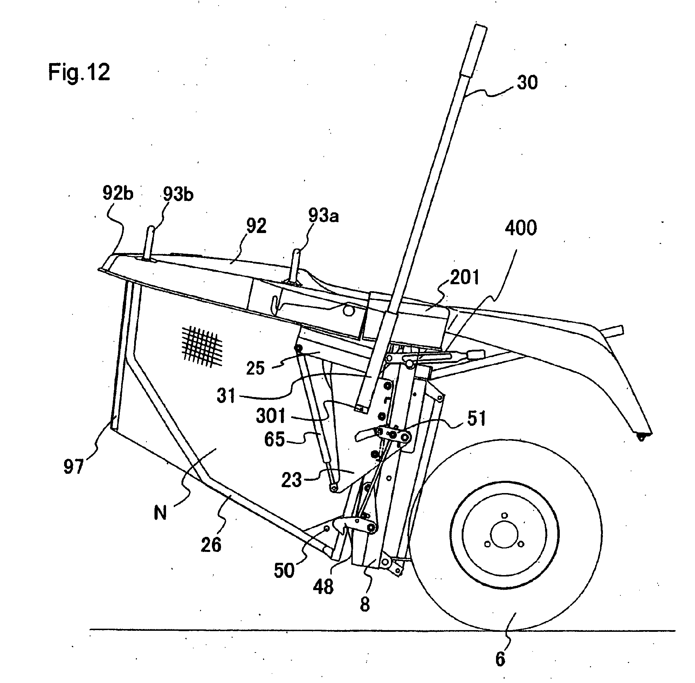

FIG. 12 illustrates the state where the upward turn of the collector 9 is stopped by the holding member 400. As illustrated in FIG. 12, the collector 9 is held at the holding position in the vicinity of the grass collecting position with the lock by the lock hook 48 being released. In this way, the holding member 400 of the present embodiment has the function of holding the collector 9 at the holding position as well as the above-mentioned function of abutting the protruding part 800 against the front-side edge 430e of the elongated hole 430 to thereby stop the upward turn of the collector 9.

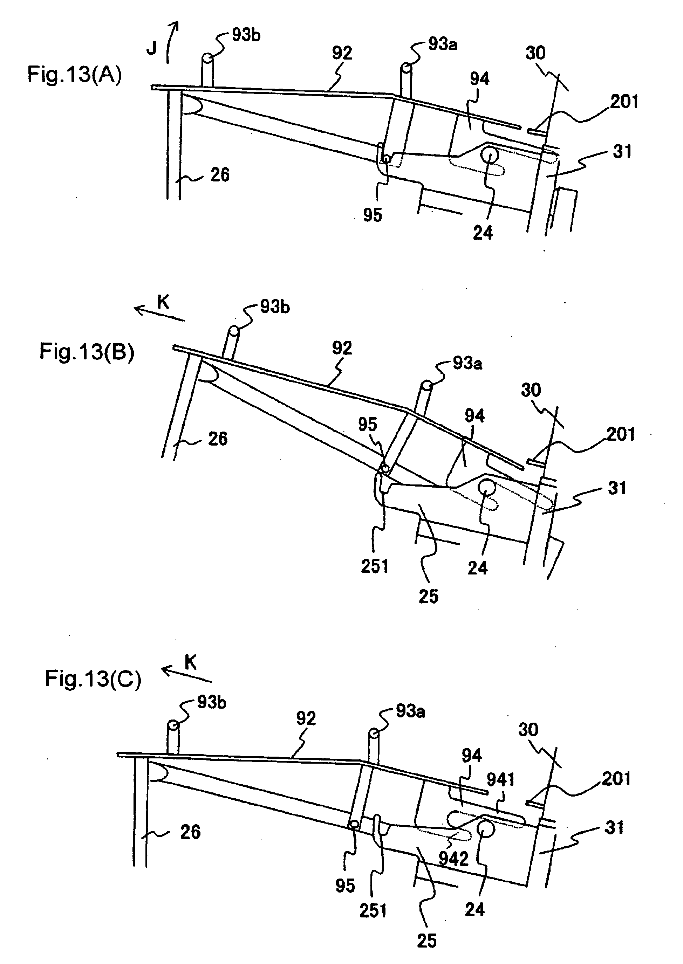

FIGS. 13(A) to 13(C) are schematic views for describing the operation of detaching the collector 9. FIG. 13(A) illustrates an attachment state of the collector 9 when the collector 9 is placed at the holding position as illustrated in FIG. 12. From the state illustrated in FIG. 13(A), a worker grips the handles 93a and 93b, and lifts the rear side of the collector 9 with respect to the collector turning shaft 24 as a fulcrum (see the arrow J), whereby the pin 95 formed on an upper side surface of the collector 9 is moved to above the concave part 251 of the turning plate 25 as illustrated in FIG. 13(B). Then, in this state, the collector 9 is moved rearward (see the arrow K), whereby the pin 95 can be separated from the concave part 251 as illustrated in FIG. 13(C).

After that, the collector 9 is moved rearward along the upper protruding part 941 and the lower protruding part 942 of the hook part 94, whereby the hook part 94 is unhooked from the collector turning shaft 24 (see the arrow K). The operation illustrated in FIGS. 13(A) to 13(C) corresponds to an example of the detaching step according to the present invention. Then, an angle of the turn from the grass collecting position to the holding position is decided by a length and an attachment position of the holding member 400, and it is preferable to set the angle of the turn to as small a value as possible, because the collector 9 can be detached more easily.

As described above, the rear side of the collector 9 is once lifted upward, to thereby separate the pin 95 from the concave part 251, and after that, the collector 9 is moved rearward, whereby the collector 9 can be detached from the mower main body 2.

Then, when the collector 9 is to be attached to the mower main body 2 after maintenance of the collector 9 and the rear part of the mower main body 2, the rear end part of the collector 9 is lifted while the hook part 94 is fitted with the collector turning shaft 24, and then the pin 95 is fitted into the concave part 251.

After that, an operation of releasing the collector 9 from the holding position is performed, so that the coupling is released.

The collector 9 is turned downward by gripping the turn operation lever 30 or the rear part of the collector 9 while the holding member 400 is moved downward by gripping the handle part 420. As a result, the protruding part 800 is moved from the holding hole 431 to the elongated hole 430, and the engagement of the protruding part 800 with the edge 431e is released, to thereby release the coupling of the collector turning shaft 24 and the turning plates 25 and 250 to the portion of the mower main body 2 other than the collector turning shaft 24 and the turning plates 25 and 250.

After the collector 9 held at the holding position has been released in this way, in order to move the collector 9 to the grass collecting position, the collector 9 is subsequentlyy turned downward, and the lock hook 48 is engaged with the lock pin 50, whereby the collector 9 is returned to the grass collecting position.

On the other hand, after the collector 9 held at the holding position has been released, in order to move the collector 9 to the discharge position, the gripping described above is released. As a result, the collector 9 is turned upward by the urging force of the damper 65, and as illustrated in FIGS. 10(A) and 10(B), the holding member 400 slides so that the protruding part 800 moves inside of the elongated hole 430. Then, the protruding part 800 abuts against the edge 430, and the upward turn of the collector 9 stops, so that the movement of the collector 9 to the discharge position is completed.

Hereinafter, a description is given of effects of the mower according to the present embodiment.

For example, with the holding member 400 not being provided, the engagement between the lock hook 48 and the lock pin 50 is released in order to detach the collector 9 from the mower main body 2, so that the collector 9 is turned upward by the urging force of the damper 65 to move to the discharge position. In order to separate the pin 95 from the concave part 251 in the state where the collector 9 has moved to the discharge position as described above, a worker needs to use his/her own power to further turn the collector 9. After that, in order to unhook the hook part 94 from the collector turning shaft 24 to thereby detach the collector 9, it is necessary to pull out the collector 9 upward, which thus makes it extremely difficult to detach the collector 9.

On the other hand, because the mower of the present embodiment is provided with the holding member 400, it is possible to hold the collector 9 at the position in the vicinity of the grass collecting position in the state where the engagement of the lock hook 48 with the lock pin 50 is released. Therefore, the collector 9 can be easily attached to and detached from the mower main body 2.

The present embodiment has a simple structure in which an electromagnetic cylinder and the like are not used unlike the conventional example disclosed in Japanese Patent Laid-Open No. 2010-172241, and hence the costs can be reduced.

The configuration in which the protruding part 800 slides inside of the elongated hole 430 can reduce the risk of an erroneous operation.

The holding member 400 couples the upper part of the rear frame 8 and the front-side part of the turning plate 25 from the holding pipe 31 to each other, and hence the length can be shortened. In addition, the holding member 400 is provided at a position at which a worker can easily see the holding member 400, and thus is easy to operate.

In the present embodiment, as illustrated in FIG. 4 and the like, the upper protruding part 941 of the hook part 94 protrudes so as to be longer than the front end 92a of the cover part 92. Accordingly, the hook part 94 is easy to see, and the hook part 94 can be easily moved so as to sandwich the collector turning shaft 24. As a result, the collector 9 can be easily attached to the mower main body 2.

In addition, in the present embodiment, in the state where the collector 9 is placed at the holding position as illustrated in FIG. 12, an upper end part of the handle 93b located on the rear side is positioned so as to be higher than a rear end 92b of the cover part 92. This configuration enables a worker to easily grip the handle 93b. In the present embodiment, an upper end part of the handle 93a located on the front side is also positioned so as to be higher than the rear end 92b of the cover part 92, which enables the worker to grip the handles 93a and 93b more easily.

The flexible elastic member 97 is provided on the rear surface of the collector 9, whereby grass mowed by the mower unit 1 and scattered matters can be received by the flexible elastic member 97, which makes it possible to prevent the breakage of the ventilation net N.

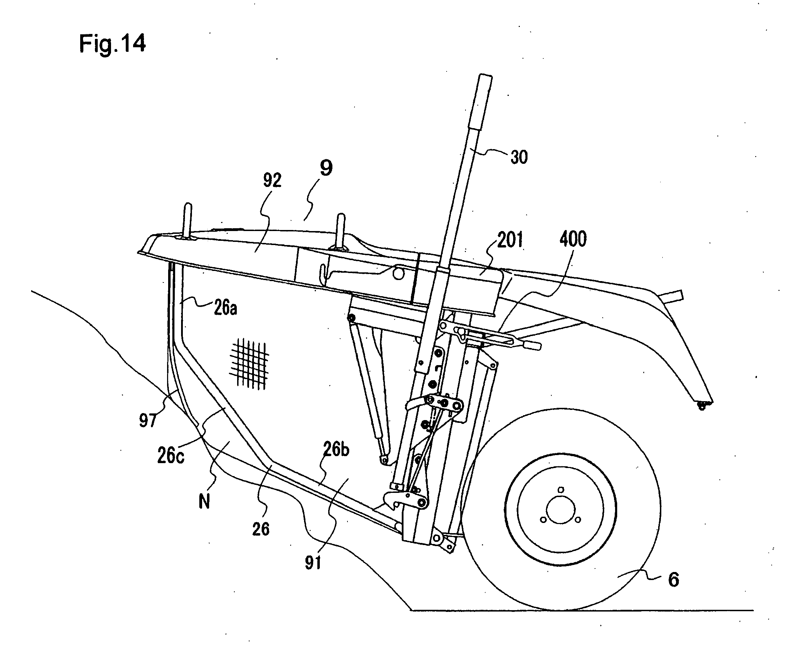

Further, in the present embodiment, a corner is not formed in the lower rear end part of the net frame 26 of the collector 9. Therefore, as illustrated in FIG. 14, even if the collector 9 hits against an obstacle on the rear side, the flexible elastic member 97 bends, which makes it possible to reduce the breakage of the ventilation net N due to friction or the like.

Moreover, in the present embodiment, the cleaning bar housing hole 300 through which the cleaning bar for removing grass can be housed is provided. Therefore, the cleaning bar and the like are prevented from being dropped, and the cleaning bar does not need to be placed on the floor 14 or the like, so that the external appearance can be kept neat.

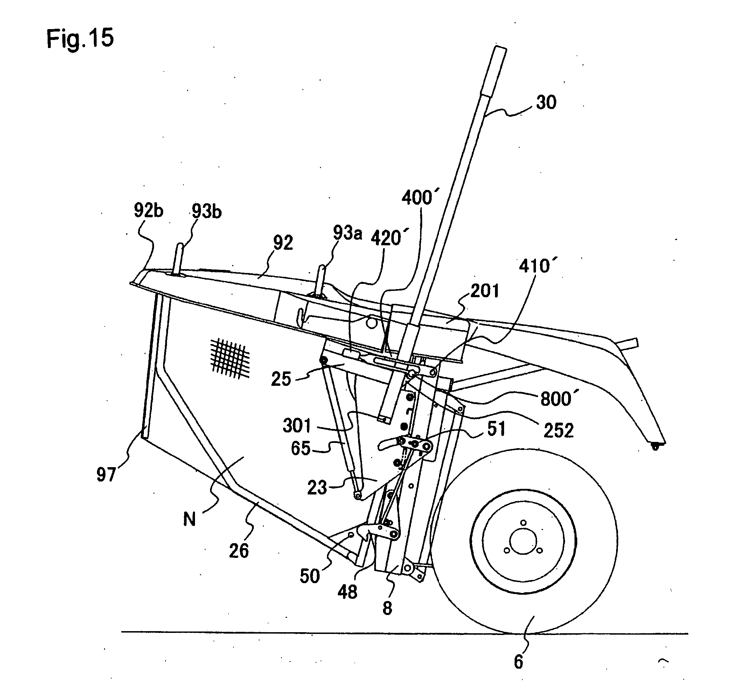

Then, the rear end of the holding member 400 of the present embodiment is fixed to the turning side (in the present embodiment, the front-side part 252 of the turning plate 25), and the protruding part 800 is provided on the rear frame 8, but the opposite configuration may be adopted. That is, as a holding member 400' illustrated in FIG. 15, the components may be placed back to front compared with those of the holding member 400. The holding member 400' has: a front end part 410' which is tumably attached to the rear frame 8; and a rear end part on which a handle part 420' is formed. In addition, a protruding part 800' is formed in the front-side part 252 of the turning plate 25.

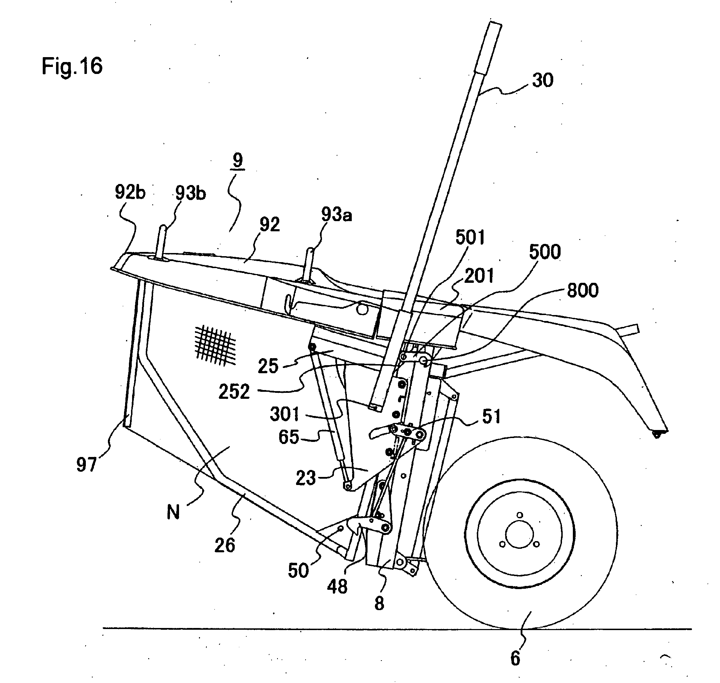

Moreover, the holding member 400 described in the above embodiment is provided with the handle part 420, the elongated hole 430, and the holding hole 431, but may not be provided therewith, and for example, a configuration as illustrated in FIG. 16 may be adopted. A holding member 500 illustrated in FIG. 16 is a hook-like member having a rear end part 501 which is tumably supported by the turning plate 25. Then, a hook part thereof is hooked on the protruding part 800, to thereby engage the protruding part 800 with the hook part, so that the collector 9 can be held at the holding position. On the other hand, the hook part is turned about the rear end part 501 while the collector 9 is turned downward, and the engagement of the protruding part 800 with the hook part is released, whereby the collector 9 held at the holding position is released.

### (Second Embodiment)

Next, a description is given of a mower according to Embodiment 2 of the present invention. The mower according to Embodiment 2 has the same basic configuration as that of Embodiment 1, but a configuration of the holding member is different therefrom. Therefore, this difference is mainly described.

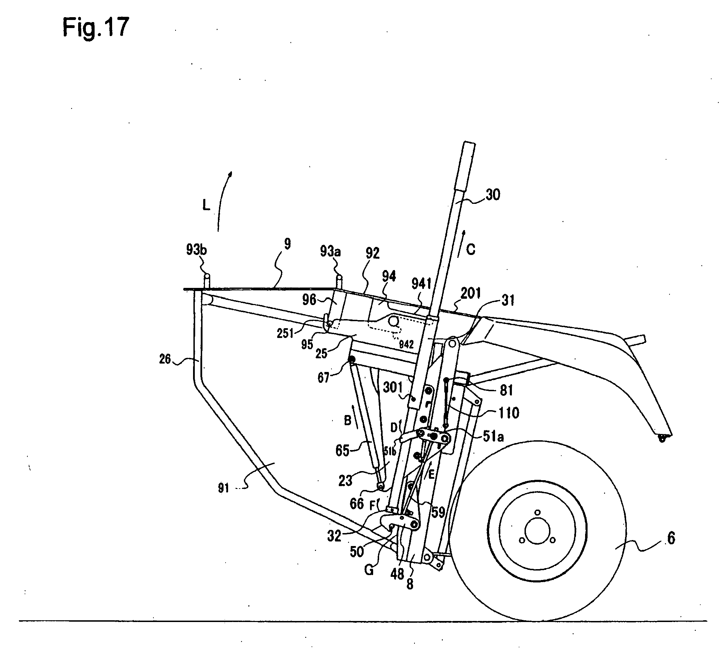

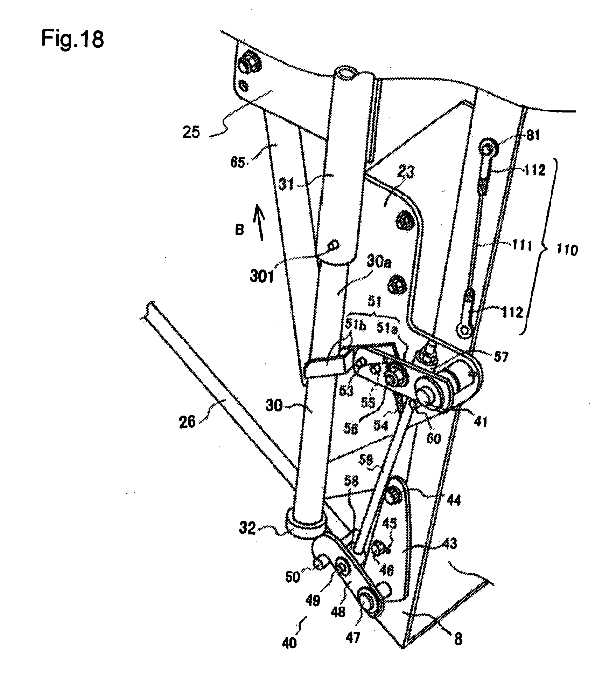

FIG. 17 is a left-side configuration view illustrating the mower according to Embodiment 2. FIG. 18 is a perspective configuration view illustrating a side surface in the vicinity of the rear end of the mower main body 2. As illustrated in FIG. 17 and FIG. 18, a holding member 110 of Embodiment 2 includes a wire unlike that of Embodiment 1.

The holding member 110 includes a wire 111 and coupling parts 112 provided at both ends of the wire 111. The coupling parts 112 each have a ring-like part. A pin 81 is provided on a portion of the rear frame 8 which is located above the lower end of the holding pipe 31 when the collector 9 is placed at the grass collecting position. The ring-like part of the coupling part 112 at one end of the holding member 110 is fitted with the pin 81, whereby the holding member 110 is attached tumably about the pin 81.

On the other hand, a pin 301 is provided in the vicinity of the lower end of the holding pipe 31, and the coupling part 112 at another end of the holding member 110 is detachably fitted with the pin 301.

Next, a description is given of an operation of detaching the collector 9 from the mower main body 2.

First, the lower coupling part 112 of the holding member 110 illustrated in FIG. 17 and FIG. 18 is fitted with the pin 301 formed on the holding pipe 31, whereby the rear frame 8 and the holding pipe 31 are coupled to each other. The operation of coupling in this way corresponds to an example of the holding step.

Then, the turn operation lever 30 is pulled upward in the state where the rear frame 8 and the holding pipe 31 are coupled to each other, so that the engagement of the lock hook 48 with the lock pin 50 is released. As a result, the collector 9 starts turning upward about the collector turning shaft 24 by the urging force of the damper 65, but the rear frame 8 and the holding pipe 31 are coupled to each other, and hence at the moment at which the holding member 110 is stretched completely, the upward turn of the collector 9 stops. This operation of releasing the engagement corresponds to an example of the fixing releasing step according to the present invention.

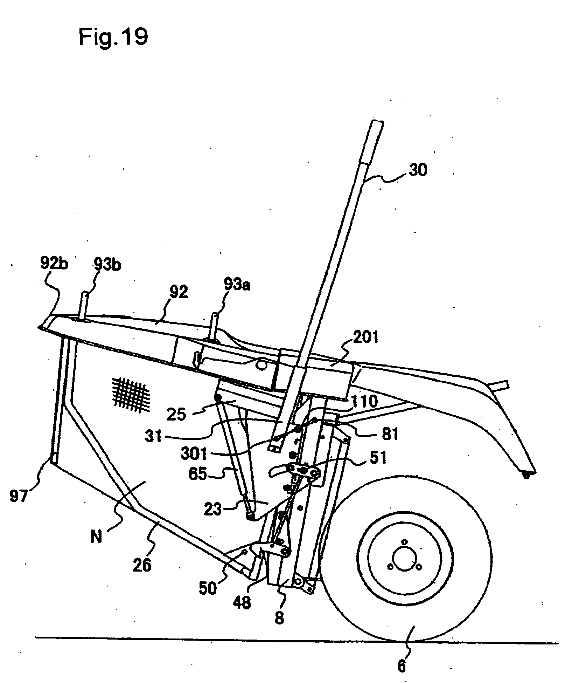

FIG. 19 illustrates the state where the upward turn of the collector 9 is stopped by the holding member 110. As illustrated in FIG. 19, the collector 9 is held at the holding position in the vicinity of the grass collecting position with the lock by the lock hook 48 being released.

In this way, the coupling part 112 at another end of the holding member 110 is fitted with the pin 301, whereby the holding pipe 31 and the rear frame 8 are coupled to each other. As a result, even when the lock is released, the collector 9 can be held at the holding position. Therefore, in the state where the collector 9 is held at the holding position, it is possible to easily detach the collector 9 as described in Embodiment 1 (see FIGS. 13(A) to 13(C)).

Then, when the collector 9 is to be attached to the mower main body 2 after maintenance of the collector 9 and the rear part of the mower main body 2, the rear end part of the collector 9 is lifted while the hook part 94 is fitted with the collector turning shaft 24, and then the pin 95 is fitted into the concave part 251. After that, the collector 9 is turned downward by gripping the turn operation lever 30 or the rear part of the collector 9, and the lock hook 48 is engaged with the lock pin 50, whereby the collector 9 is returned to the grass collecting position. After the collector 9 has been returned to the grass collecting position, the coupling of the coupling part 112 of the holding member 110 to the pin 301 is released. Then, the reason why the coupling of the holding member 110 is released after returning the collector 9 to the grass collecting position as described above is that the coupling is difficult to release with the holding member 110 being stretched completely.

Then, when the collector 9 is to be moved from the grass collecting position to the discharge position, the lock is released without fitting the lower coupling part 112 of the holding member 110 with the pin 301, whereby the collector 9 is moved from the grass collecting position to the discharge position by the urging force of the damper 65.

Also in Embodiment 2, similarly to Embodiment 1, because the holding member 110 is provided, it is possible to hold the collector 9 at the position in the vicinity of the grass collecting position in the state where the engagement of the lock hook 48 with the lock pin 50 is released. Therefore, the collector 9 can be easily attached to and detached from the mower main body 2.

The present embodiment has a simple structure in which an electromagnetic cylinder and the like are not used unlike the conventional example disclosed in Japanese Patent Laid-Open No. 2010-172241, and hence the costs can be reduced.

The holding member 110 couples the upper part of the rear frame 8 and the lower part of the holding pipe 31 to each other, and hence the length of a cable can be shortened. In addition, the holding member 110 is provided at a position at which a worker can easily see the holding member 110, and thus is easy to operate.

Then, in the present embodiment, the holding member 110 has one end which is tumably fixed to the rear frame 8 by the pin 81, and another end which is to be fitted with the pin 301 of the holding pipe 31 at the time of coupling, but the opposite configuration may be adopted. That is, the holding member 110 may have one end which is turnably fixed to the pin 301, and another end which is to be fitted with the pin 81 at the time of coupling. Further, the holding member 110 may be fixed to neither the pin 81 nor the pin 301, and at the time of coupling the rear frame 8 and the holding pipe 31 to each other, both ends of the holding member 110 may be fitted with the pins 81 and 301, respectively.

Then, in the present embodiment, the holding member 110 has a configuration in which the coupling parts 112 are provided at both ends of the wire 111, but it is possible to adopt a configuration in which a cable having a higher elasticity than that of the wire is used and the coupling parts are provided at both ends of the cable. Further, the present invention is not limited to the cable, and for example, a bar-like metal member may be used.

Moreover, in Embodiment 2, the pin 301 is formed on the holding pipe 31, and hence, unlike Embodiment 1, it is not necessary to provide the front-side part 252 of the turning plate 25 from the holding pipe 31.

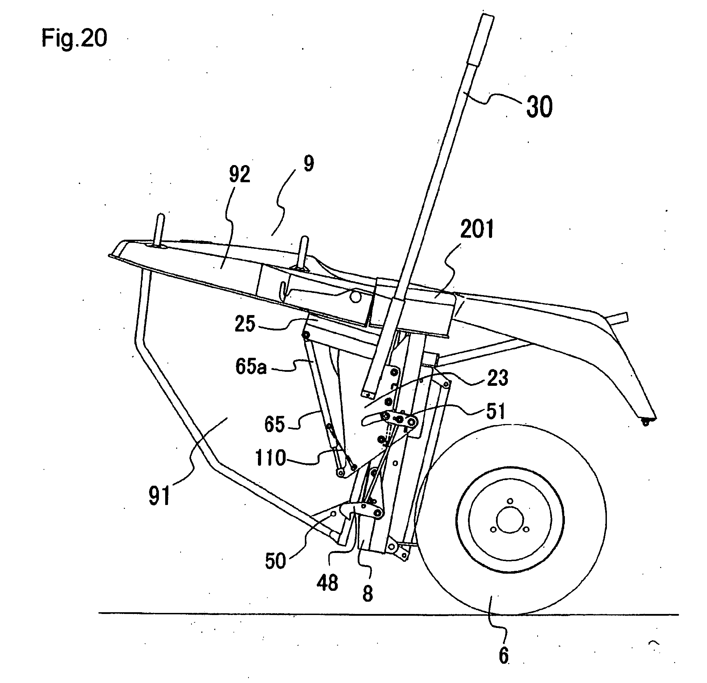

Moreover, in the present embodiment, the holding member 110 couples the upper part of the rear frame 8 and the lower part of the holding pipe 31 to each other, but the portions to be coupled are not limited thereto. For example, as illustrated in FIG. 20, a vicinity of a portion of the attachment bracket 23 to which the damper 65 is attached may be coupled to a portion 65a of the damper 65 which moves in the upward direction. In short, the holding member 110 may be attached so that one end thereof is coupled to a portion of the mower main body 2 which does not turn, and another end thereof is coupled to a portion of the mower main body 2 which turns or moves upward.

In addition, in the case as illustrated in FIG. 20 where one end of the holding member 110 is not coupled to the holding pipe 31, the holding pipe 31 may be attached to a portion of the mower main body 2 other than the turning plates 25 and 250 and the collector turning shaft 24 (for example, the attachment bracket 23 or the like). In this case, the turn operation lever 30 has only the function of releasing the fixing between the lock hook 48 and the lock pin 50, and does not have the function as an operation lever for turning the collector 9. For example, when the collector 9 is to be returned from the discharge position to the grass collecting position, the collector 9 can be turned downward by gripping the rear part of the collector 9.

Moreover, an example of the lifting part according to the present invention corresponds to the damper 65 according to Embodiments 1 and 2. In the present embodiments, a press-type damper which turns the collector 9 upward by pressing is used, but a pull-type damper may be used.

### (Reference Example 1)

Hereinafter, a description is given of Reference Example 1 of an invention relating to the present invention. A mower of Reference Example 1 has the same basic configuration as that of Embodiment 1, but the mower of Reference Example 1 has a feature that the grass mowing position of the mower unit 1 can be adjusted. Then, a description of the configuration similar to that of Embodiment 1 is omitted.

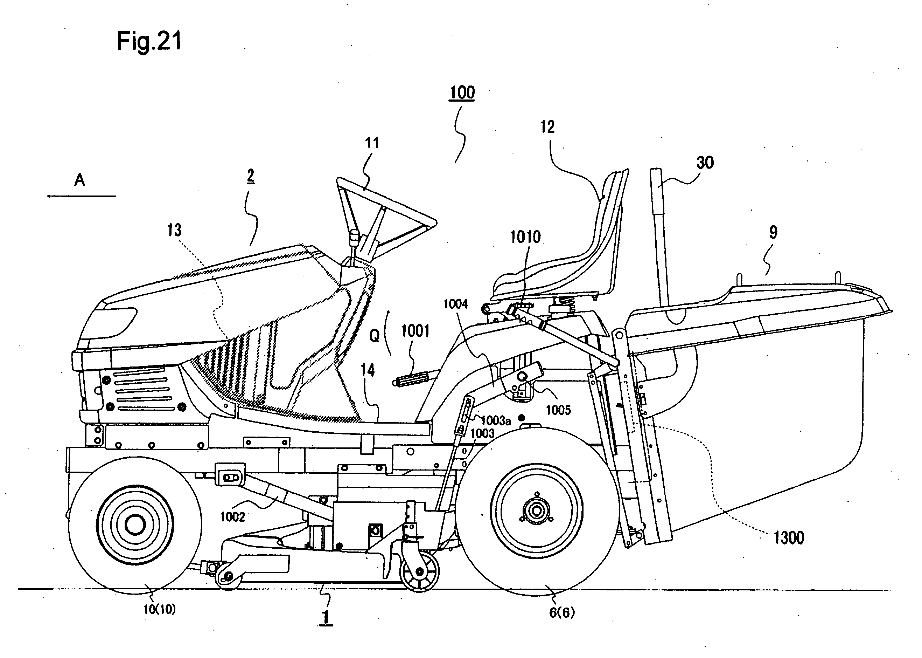

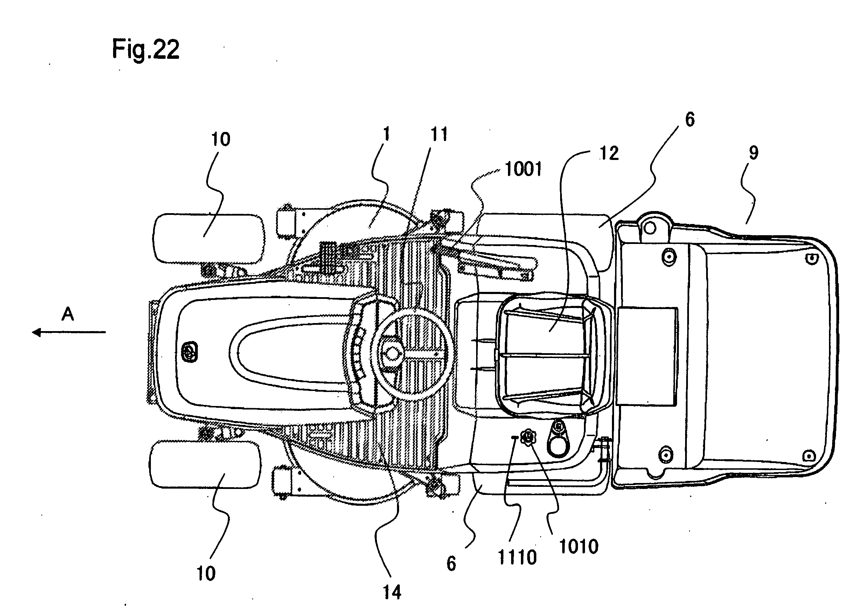

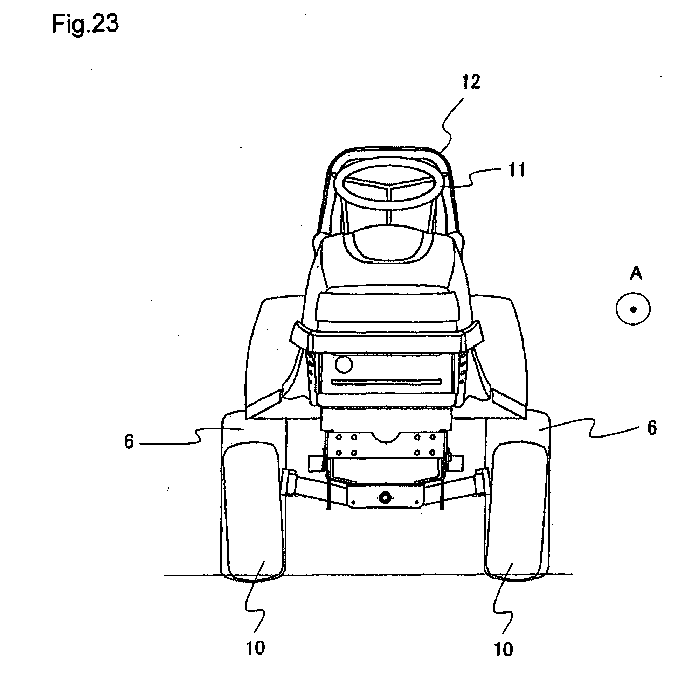

FIG. 21 is a right-side configuration view illustrating the mower according to Reference Example 1. FIG. 22 is a planar configuration view illustrating the mower according to Reference Example 1. FIG. 23 is a front configuration view illustrating the mower according to Reference Example 1.

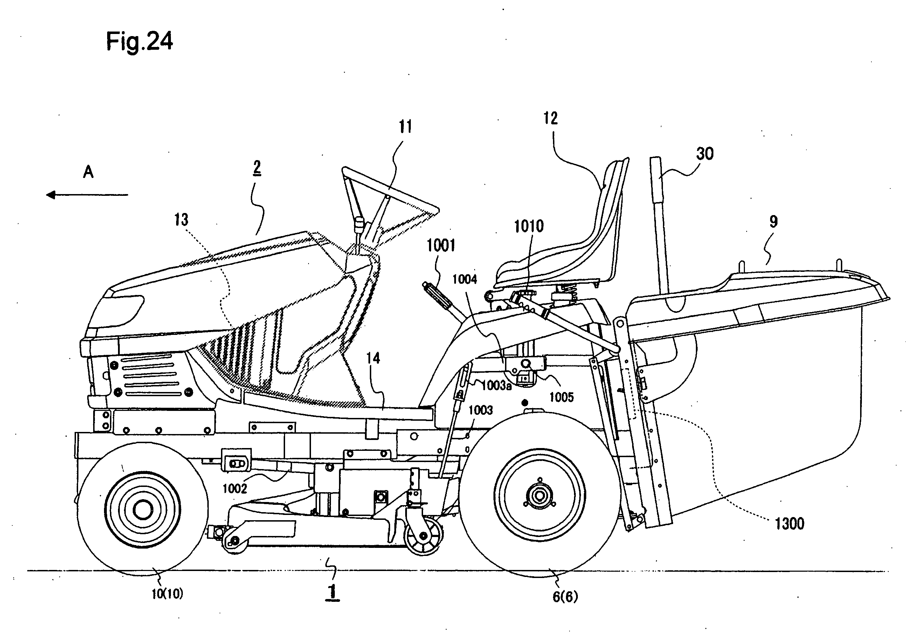

As illustrated in FIG. 21 to FIG. 23, a mower unit moving lever 1001 for moving the mower unit 1 upward or downward is provided on a left side surface side of the mower of Reference Example 1. The mower unit 1 is moved upward by pulling up the mower unit moving lever 1001 in the arrow Q direction in the figure (see FIG. 21). FIG. 24 illustrates such a state where the mower unit 1 has been moved upward.

At the time of mowing grass, the mower unit 1 is placed downward as illustrated in FIG. 21, and on the other hand, at the time of, for example, moving the mower without mowing grass, the mower unit 1 is retracted upward. The lower position of the mower unit 1 is referred to as grass mowing position, and the upper position thereof is referred to as retracted position.

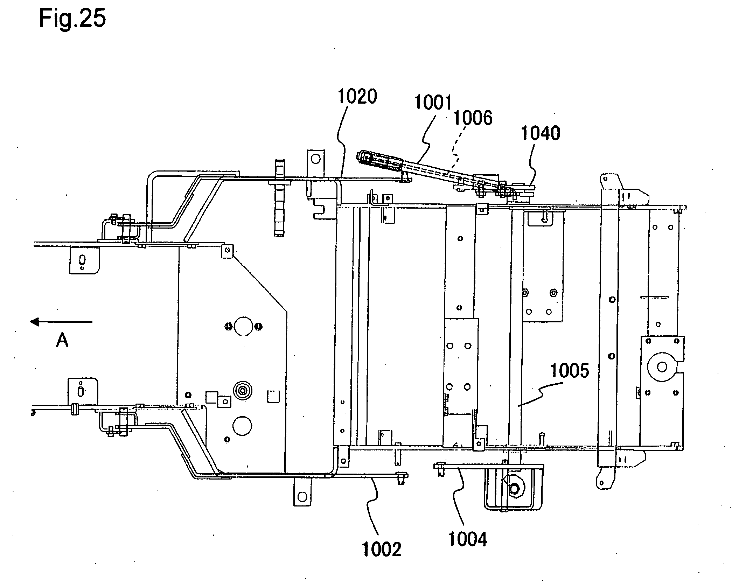

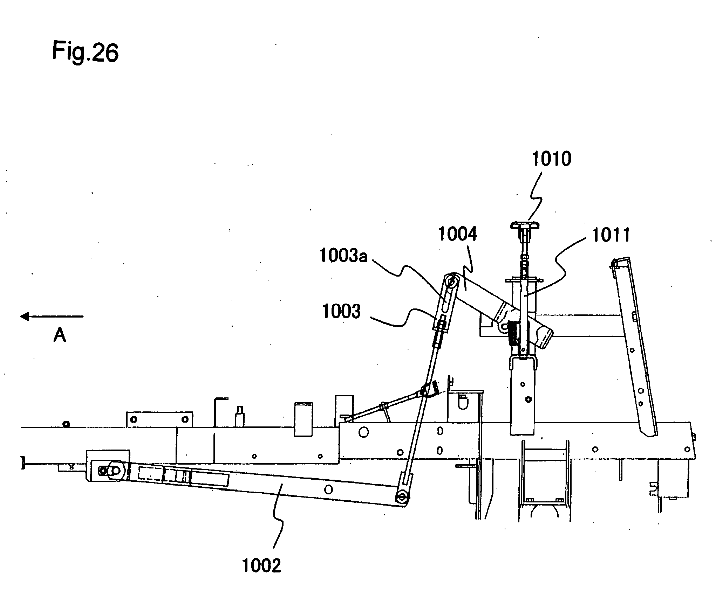

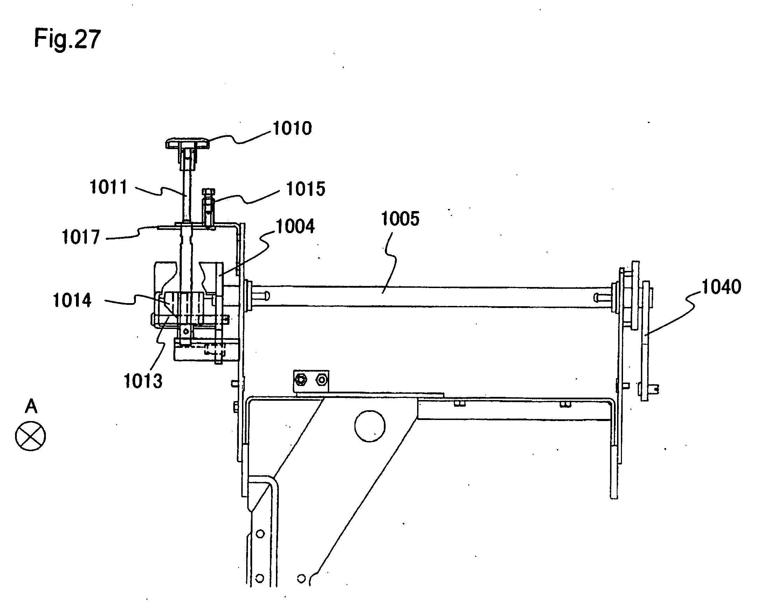

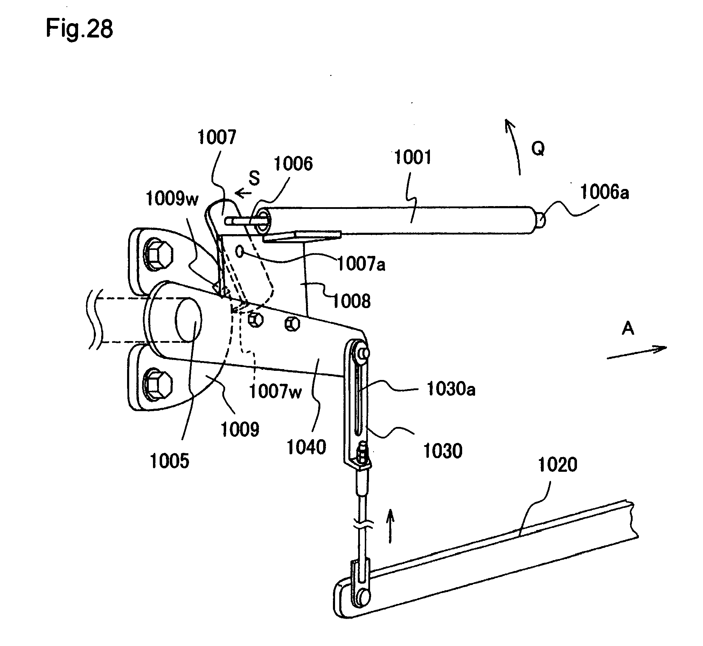

FIG. 25 is a planar configuration view illustrating a frame of the mower according to Reference Example 1. FIG. 26 is a right-side configuration view illustrating the frame of the mower according to Reference Example 1. FIG. 27 is a rear-side configuration view illustrating the frame of the mower according to Reference Example 1. FIG. 28 is a perspective configuration view illustrating a vicinity of a second turning arm 1040 on a left side surface of the mower according to Reference Example 1.

As illustrated in FIG. 21, FIG. 25, and FIG. 26, a mower unit coupling member 1002 coupled to the mower unit 1 is provided above the mower unit 1. The mower unit coupling member 1002 is a bar-like member which is placed so that a longitudinal direction thereof coincides with the front-back direction of the mower, and the mower unit coupling members are provided on both of the right side surface and the left side surface. The mower unit coupling member on the right side surface is denoted by 1002, and the mower unit coupling member on the left side surface is denoted by 1020 (see FIG. 28).

A front end of each of the mower unit coupling members 1002 and 1020 is turnably coupled to a lower side of the floor 14. On the other hand, as illustrated in FIG. 21 and FIG. 28, a rear end of each of the mower unit coupling members 1002 and 1020 is rotatably coupled to a lower end of each of first turning arms 1003 and 1030 which are provided on the right side surface and the left side surface, respectively. An upper end of each of the first turning arms 1003 and 1030 is turnably coupled to a front end of each of the second turning arms 1004 and 1040 which are provided on the right side surface and the left side surface, respectively. Then, the first turning arms 1003 and 1030 are not illustrated in FIG. 25.

Moreover, elongated holes 1003a and 1030a are formed at upper ends of the first turning arms 1003 and 1030, respectively. Bolts fitted into the elongated holes 1003a and 1030a are fixed to the second turning arms 1004 and 1040, respectively.

With this configuration, the second turning arms 1004 and 1040 are coupled to the first turning arms 1003 and 1030, respectively. The elongated holes 1003a and 1030a serve as shock absorbers for absorbing a shock which is generated, for example, when the mower unit 1 hits against an obstacle.

As illustrated in FIG. 25, the second turning arm 1004 on the right side surface and the second turning arm 1040 on the left side surface are coupled to each other by a turning shaft 1005 which is provided so as to be bridged between the right side surface and the left side surface, and the second turning arms 1004 and 1040 are configured to be turnable about the turning shaft 1005.

As illustrated in FIG. 28, a lock releasing bar 1006 is provided inside of the mower unit moving lever 1001, and an upper end thereof constitutes a lock releasing switch 1006a. A lower end of the lock releasing bar 1006 is coupled to a hook-like member 1007. The hook-like member 1007 is tumably fixed to a plate 1008 which connects the mower unit moving lever 1001 and the second turning arm 1040 to each other. The turning center of the hook-like member 1007 is illustrated as a turning shaft 1007a. Further, an engaged plate 1009 is provided around the turning shaft 1005, and a concave part 1009w into which an engagement part 1007w at a leading end of the hook-like member 1007 is fitted is formed on the engaged plate 1009. The mower unit moving lever 1001 is turned in an upper direction of FIG. 28 (see the arrow Q direction), and the engagement part 1007w is fitted into the concave part 1009w, so that the mower unit moving lever 1001 is locked.

Then, as illustrated in FIG. 21 and FIG. 24, a metal sensor 1300 which detects that the collector 9 becomes full of collected grass is provided in the rear end part of the mower main body 2.

Next, a description is given of a configuration of adjusting the grass mowing position of the mower unit 1.

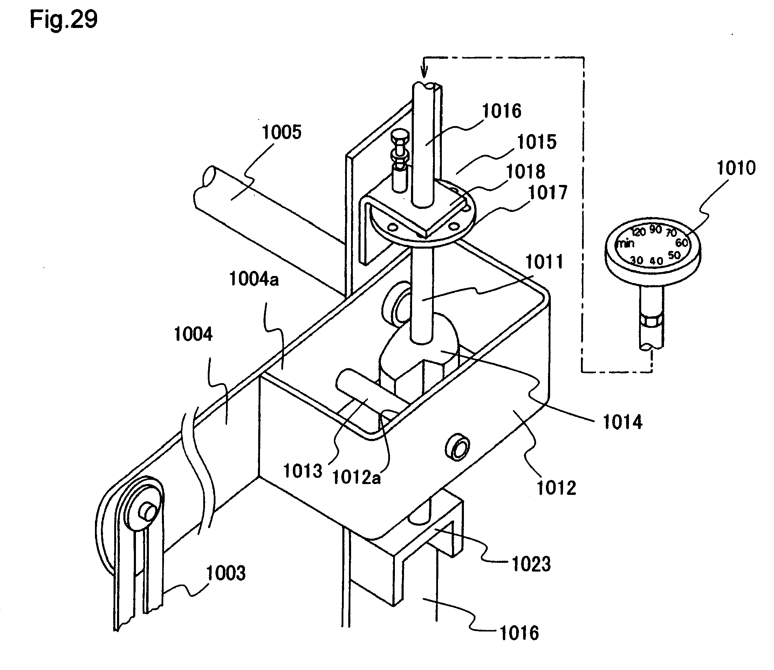

FIG. 29 is a perspective configuration view illustrating the vicinity of the second turning arm 1004 on the right side surface of the mower. As illustrated in FIG. 21, FIG. 25, and FIG. 29, an adjustment dial 1010 for adjusting the grass mowing position of the mower unit 1 is provided on an upper surface on the right side surface side of the mower main body 2. As illustrated in FIG. 29, for example, dial values "30", "40", "50", "60", "70", "90", "120", and "min" are marked on the adjustment dial 1010. These numbers each indicate a height of mowed grass. In the case of "30", a lower end of a grass cutting blade of the mower unit 1 is positioned at a height of 30 mm from the ground, and a portion of the grass which is higher than 30 mm from the ground is mowed. Moreover, "min" indicates the lowest grass mowing position. Moreover, as illustrated in the plan view of FIG. 22, a sign 1110 is marked on a cover in the vicinity of the adjustment dial 1010, and a dial value of a desired height of mowed grass is set to the sign 1110, whereby the mower unit 1 is adjusted to the desired height of mowed grass as described later.

Moreover, as illustrated in FIG. 29, an adjusting shaft 1011 extending downward is fixed to the adjustment dial 1010, and the adjusting shaft 1011 is rotatably supported by a supporting member 1018 and a supporting member 1023 which are attached to upper and lower parts of a frame 1016, respectively.

On the other hand, a reinforcement plate 1012 having a U-shape in plan view is provided to the second turning arm 1004, and a bar-like abutment member 1013 is placed between a surface 1004a of the second turning arm 1004 and a surface 1012a of the reinforcement plate 1012 which is opposed to the surface 1004a of the second turning arm 1004 so as to be perpendicular to the respective surfaces. In addition, a cam 1014, which abuts against the abutment member 1013 to thereby adjust the grass mowing position of the mower unit 1, is attached to the adjusting shaft 1011.

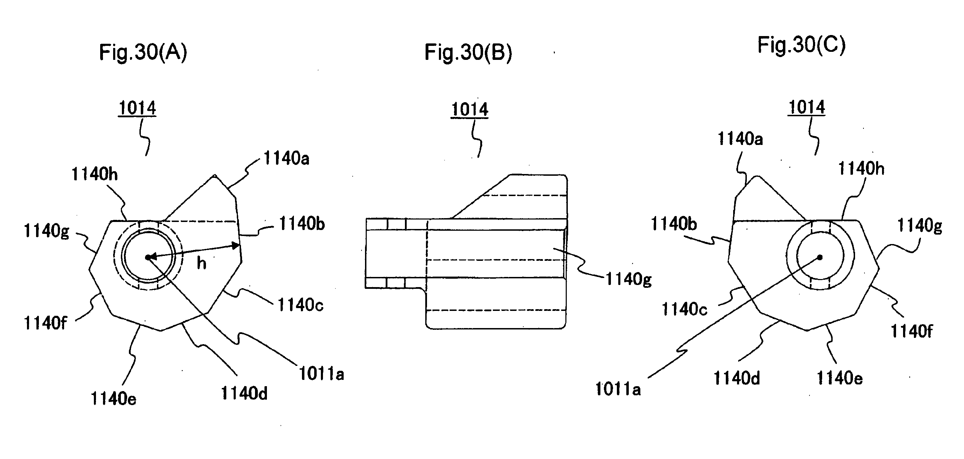

FIG. 30(A) is a planar configuration view illustrating the cam 1014, FIG. 30(B) is a side configuration view illustrating the cam 1014, and FIG. 30(C) is a bottom configuration view illustrating the cam 1014.

As illustrated in FIGS. 30(A) to 30(C), the cam 1014 has a plurality of side surfaces 1140a to 1140h whose distances from the adjusting shaft 1011 are different from each other. The lengths of perpendiculars from a center 1011a of the adjusting shaft 1011 to the side surfaces 1140a, 1140b, 1140c, 1140d, 1140e, 1140f, 1140g, and 1140h become gradually shorter in the stated order. In FIG. 30(A), a perpendicular h from the center 1011a to the side surface 1140b is illustrated.

Although the details will be described later, the dial values "120", "90", "70", "60", "50", "40", "30", and "min" of the adjustment dial 1010 correspond to the side surfaces 1140a, 1140b, 1140c, 1140d, 1140e, 1140f, 1140g, and 1140h, respectively.

The adjustment dial 1010 is rotated, and the adjusting shaft 1011 is accordingly rotated, whereby any one of the side surfaces 1140a to 1140g can be positioned so as to be opposed to the abutment member 1013. At this time, rough positioning can be performed by setting a desired one of the dial values of the adjustment dial 1010 to the sign 1110, but it is difficult to perform such precise positioning that the corresponding side surface is positioned so as to be substantially parallel to the abutment member 1013. Therefore, as illustrated in FIG. 29, a positioning part 1015 for performing such positioning that the corresponding side surface is positioned so as to be substantially parallel to the abutment member 1013, is provided to the adjusting shaft 1011 above the cam 1014.

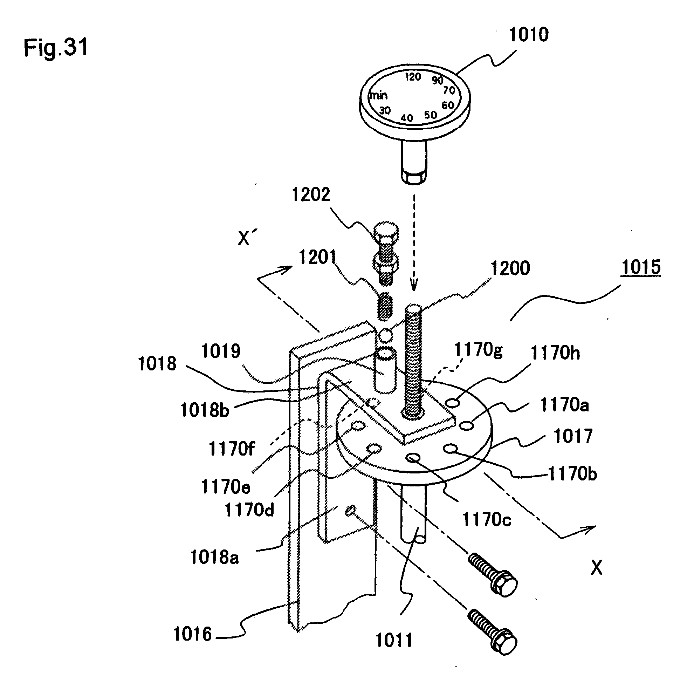

FIG. 31 is an exploded perspective view illustrating the positioning part 1015 according to Reference Example 1. As illustrated in FIG. 31, the positioning part 1015 includes: a position plate 1017 which is attached to the adjusting shaft 1011 above the cam 1014, and rotates together with the adjusting shaft 1011; and a supporting member 1018 which is placed above the position plate 1017, and supports the adjusting shaft 1011.

Concave parts 1170a, 1170b, 1170c, 1170d, 1170e, 1170f, 1170g, and 1170h corresponding to the side surfaces 1140a, 1140b, 1140c, 1140d, 1140e, 1140f, 1140g, and 1140h are formed on an upper surface of the position plate 1017. Moreover, the supporting member 1018 has an L-shape, and includes one plane part 1018a which is fixed to the frame 1016 and another plane part 1018b which supports the adjusting shaft 1011. A through-hole is formed in the plane part 1018b, and a tube-like member 1019 is provided on the through-hole. A steel ball 1200 is inserted into the tube-like member 1019, a spring 1201 is inserted thereinto from above the steel ball 1200, and the spring 1201 is pressed by a screw 1202 from above.

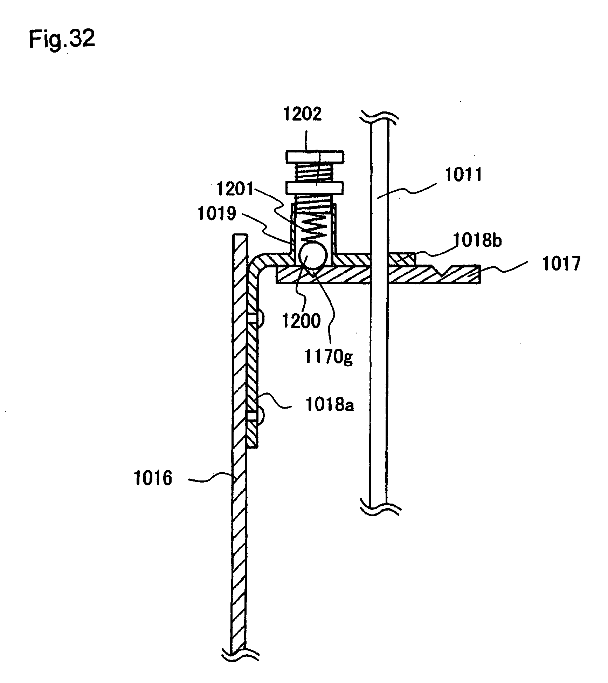

FIG. 32 is a configuration view illustrating a cross section taken along X-X' in FIG. 31. As illustrated in FIG. 32, when the adjusting shaft 1011 is rotated and any one of the concave parts 1170a to 1170g comes immediately below the tube-like member 1019, the steel ball 1200 is fitted into the corresponding concave part 1170a by an urging force of the spring 1021, which makes a sound.

Here, the positions of the cam 1014 and the position plate 1017 are adjusted so that the side surfaces 1140a to 1140h are associated with the concave parts 1170a to 1170h, respectively. For example, when the side surface 1140a is positioned so as to be opposed to the abutment member 1013 so that the side surface 1140a is parallel to a longitudinal direction of the abutment member 1013, the concave part 1170a is placed immediately blow the steel ball 1200.

Further, the adjustment dial 1010 is associated with the cam 1014 and the position plate 1017. That is, the positions of "120", "90", "70", "60", "50", "40", "30", and "min" of the adjustment dial 1010 correspond to the concave parts 1170a, 1170b, 1170c, 1170d, 1170e, 1170f, 1170g, and 1170h, respectively, and the side surfaces 1140a, 1140b, 1140c, 1140d, 1140e, 1140f, 1140g, and 1140h, respectively.

Accordingly, the adjustment dial 1010 is rotated so that a desired dial value is set to the sign 1110, whereby the steel ball 1200 is fitted into any one of the concave parts 1170a to 1170h. In this case, it can be understood from vibration transmitted to a hand and a sound made at this time that a desired one of the side surfaces 1140a to 1140h is opposed to the abutment member 1013 and is positioned so as to be substantially parallel thereto, and hence the positioning of the respective side surfaces can be performed.

Next, a description is given of an operation of the mower according to Reference Example 1.

First, a schematic description is given of an operation which is performed when the mower unit 1 is moved between the grass mowing position and the retracted position.

As illustrated in FIG. 28, when the mower unit moving lever 1001 is moved upward in the arrow Q direction, the second turning arm 1040 turns upward about the turning shaft 1005. On this occasion, because the turning shaft 1005 is fixed to the second turning arm 1040, the turning shaft 1005 also turns, and the second turning arm 1004 on the right side surface which is fixed to the turning shaft 1005 also turns upward (see FIG. 28 and FIG. 29). The first turning arms 1003 and 1030 are pulled upward by the upward turns of the second turning arms 1004 and 1040, and hence the mower unit coupling members 1002 and 1020 are also pulled upward, so that the mower unit 1 moves upward (see FIG. 24).

Then, when the mower unit moving lever 1001 is moved upward in the arrow Q direction, the engagement part 1007w at the leading end of the hook-like member 1007 illustrated in FIG. 28 is fitted into the concave part 1009w, so that the mower unit 1 is locked to be prevented from moving downward. On the other hand, when the lock releasing switch 1006a is pushed, the lock releasing bar 1006 is also pushed, and the hook-like member 1007 turns about the turning shaft 1007a as indicated by the arrow S in FIG. 28, so that the engagement of the engagement part 1007w with the concave part 1009w is released. That is, when the mower unit 1 is to be moved from the retracted position down to the grass mowing position, the lock releasing switch 1006a is pushed, whereby the mower unit moving lever 1001 can turn downward.

Next, a description is given of an operation which is performed when the grass mowing position is adjusted.

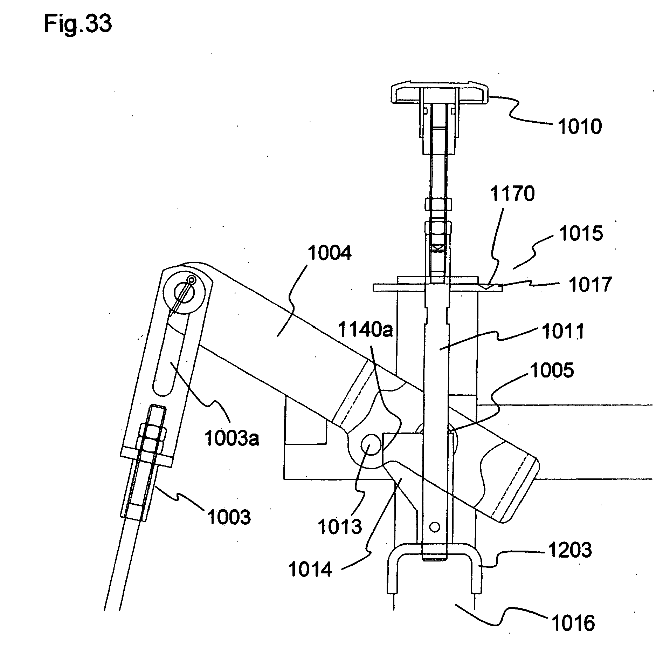

For example, it is assumed that the adjustment dial 1010 is rotated so that the side surface 1140a whose distance from the adjusting shaft 1011 is the longest is opposed to the abutment member 1013. At this time, the adjustment dial 1010 is rotated so that a portion marked with "120" is set to the sign 1110 which is marked, for example, on the cover (see FIG. 22). FIG. 33 is a configuration view illustrating the vicinity of the second turning arm 1004 on the right side surface in this case, in which the mower unit 1 is placed at the retracted position. Then, in FIG. 33, the reinforcement plate 1012 is omitted for ease of description.

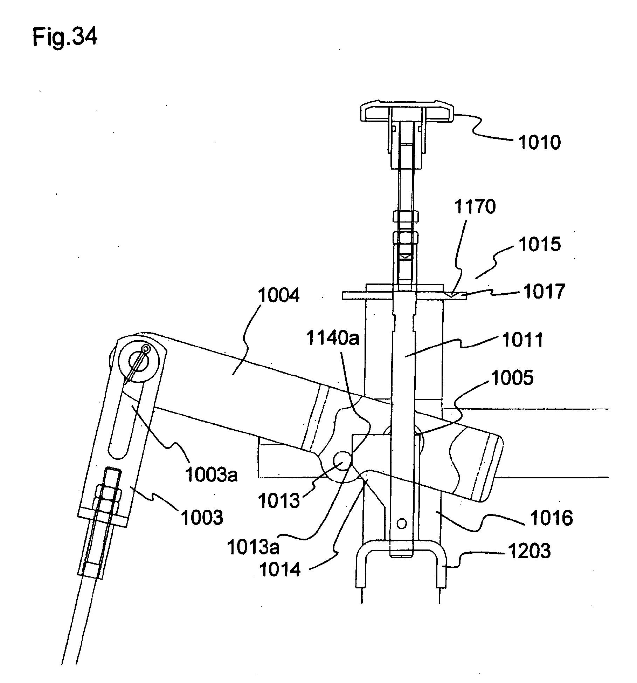

As described above, when the mower unit moving lever 1001 is moved down from the state illustrated in FIG. 33, the second turning arm 1004 can turn downward until the abutment member 1013 abuts against the side surface 1140a. FIG. 34 is a configuration view illustrating the vicinity of the second turning arm 1004 when the side surface 1013a of the abutment member 1013 abuts against the side surface 1140a.

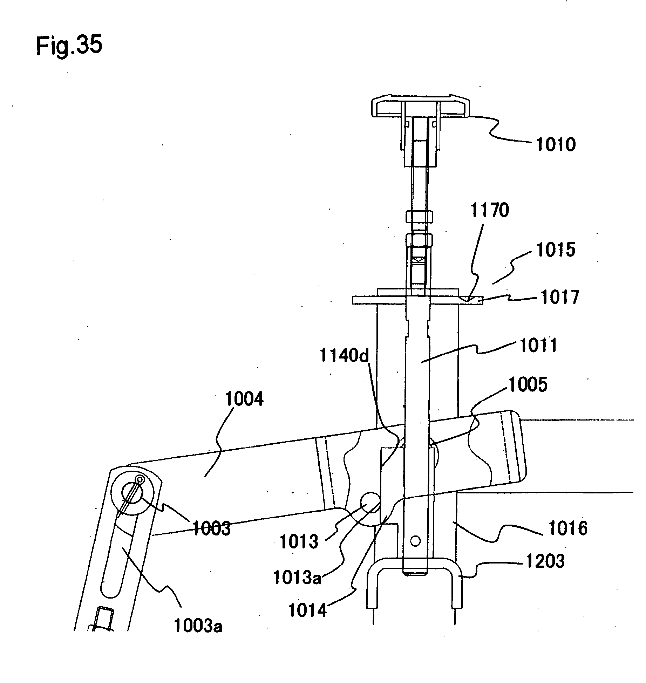

Next, it is assumed that the adjustment dial 1010 is rotated so that the side surface 1140d is opposed to the abutment member 1013. At this time, the adjustment dial 1010 is rotated so that a portion marked with "60" is set to the sign 1110 described above. FIG. 35 is a view illustrating a state where the mower unit moving lever 1001 is moved downward in this case. As illustrated in FIG. 35, the second turning arm 1004 can move downward until the side surface 1013a of the abutment member 1013 abuts against the side surface 1140d.

Here, the distance of the side surface 1140d from the adjusting shaft 1011 is shorter than the distance of the side surface 1140a therefrom. Therefore, in the state where the side surface 1140d abuts against the abutment member 1013, the second turning arm 1004 turns to a lower position than in the state where the side surface 1140a abuts against the abutment member 1013. As a result, the mower unit 1 which is coupled indirectly to the second turning arm 1004 via the first turning arm 1003 and the mower unit coupling member 1002 is also positioned at a lower position.

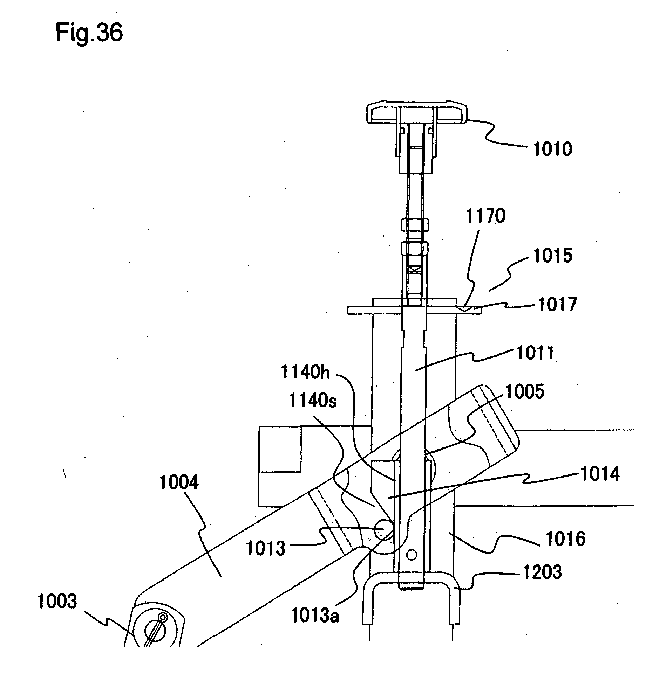

Next, it is assumed that the adjustment dial 1010 is rotated so that the side surface 1140h whose distance from the adjusting shaft 1011 is the shortest is opposed to the abutment member 1013. At this time, the adjustment dial 1010 is rotated so that a portion marked with "min" is set to the sign 1110 described above. FIG. 36 is a view illustrating a state where the mower unit moving lever 1001 is moved downward in this case. As illustrated in FIG. 36, the second turning arm 1004 can move downward until the side surface 1013a of the abutment member 1013 abuts against the side surface 1140h. This state corresponds to the state where the grass mowing position is adjusted to the lowest position. Then, a cutout 1140s illustrated in FIGS. 30(A) to 30(C) and FIG. 36 is formed for preventing the abutment member 1013 from abutting against the side surface 1140a until the abutment member 1013 abuts against the side surface 1140h.

The grass mowing position of the mower unit 1 can be adjusted by rotating the adjustment dial 1010 as described above.

Moreover, the simplified configuration of the frame can be achieved.

Then, in Reference Example 1, the abutment member 1013 is the bar-like member, but the shape thereof is not limited to a bar-like shape.

Moreover, in Reference Example 1, the U-shaped reinforcement plate 1012 is provided to the second turning arm 1004. Alternatively, the abutment member 1013 may erect from the second turning arm 1004 without providing the reinforcement plate 1012.

Moreover, in the positioning part 1015 of Reference Example 1, the concave parts 1170a to 1170h are provided on the upper surface of the position plate 1017. Alternatively, the concave parts 1170a to 1170h may be provided on a lower surface thereof, the plane part 1018a may be placed below the position plate 1017, and the steel ball 1200 may be pressed upward from below.

The mower and the method of detaching the collector of the mower according to the present invention provide an effect that the collector is easily detached with a simple configuration, and are effectively applied to a riding-type lawn mower and the like.

### Description of Symbols

- 1: mower unit
- 2: mower main body
- 6: rear wheel
- 7: duct
- 8: rear frame
- 9: collector
- 10: front wheel
- 23: attachment bracket
- 24: collector turning shaft
- 25: turning plate
- 26: net frame
- 30: turn operation lever
- 31: holding pipe
- 32: engagement ring
- 40: locking mechanism
- 41: supporting shaft
- 43: hook plate
- 44: tightening bolt
- 45: elongated hole
- 46: adjusting bolt
- 47: hook shaft
- 48: lock hook
- 49,56: coupling pin
- 50: lock pin
- 51: swinging arm
- 53: lever pin
- 54: return spring
- 55: stopper
- 57, 58: coupling boss
- 59: link rod
- 60: stopper
- 65: damper
- 91: container part
- 92: cover part
- 93a, 93b: handle
- 94: hook part
- 95: pin
- 96: fixing member
- 100: mower
- 110: holding member
- 111: wire
- 112: coupling part
- 201: rear cover
- 230: attachment bracket
- 250: turning plate
- 251: concave part
- 300: cleaning bar housing hole
- 301: pin
- 400: holding member
- 410: rear end part
- 420: handle part
- 430: elongated hole
- 431: holding hole
- 500: holding member
- 501: rear end part
- 800: protruding part
- 941: upper protruding part
- 942: lower protruding part
- 961: cover attachment portion
- 962: container attachment portion
- 963, 964: bolt
- 1001: mower unit moving lever
- 1002: mower unit coupling member
- 1003: first turning arm
- 1003a: elongated hole
- 1004: second turning arm
- 1005: turning shaft
- 1006: lock releasing bar
- 1007: hook-like member
- 1008: plate
- 1009: engaged plate
- 1010: adjustment dial
- 1011: adjusting shaft
- 1012: reinforcement plate
- 1013: abutment member
- 1014: cam
- 1015: positioning part
- 1016: frame
- 1017: position plate
- 1018: supporting member
- 1019: tube-like member
- 1020: mower unit coupling member
- 1021: spring
- 1023: supporting member
- 1030: first turning arm
- 1030a: elongated hole
- 1040: second turning arm
- 1140a, 1140b, 1140c, 1140d, 1140e, 1140f, 1140g, 1140h: side surface
- 1170a, 1170b, 1170c, 1170d, 1170e, 1170f, 1170g, 1170h: concave part
- 1200: steel ball
- 1201: spring
- 1202: screw

## Claims

1. A mower that has a mower main body (2) and a collector (9) which is detachably provided to a rear part of the mower main body (2) and into which mowed grass is collected, comprising:
a fixing mechanism (47, 48, 50) which fixes the collector (9) to a grass collecting position for collecting the grass, when the grass is mowed;
a fixing releasing mechanism (30, 32, 31, 41, 51b, 51 a, 55, 54, 49, 56, 57, 58, 59, 60) which releases the fixing;
a lifting part (65) which lifts the collector (9) from the grass collecting position to a discharge position for discharging the collected grass, when the fixing is released; and **characterised in that** the mower further comprises
a holding member (400) which is capable of holding, against the lifting, the collector (9) at a holding position in a vicinity of the grass collecting position, when the fixing is released,
wherein the collector is (9) configured to be detachable from the rear part of the mower main body (2) in a state where the collector (9) is at the holding position.

2. The mower according to Claim 1, wherein:
the mower main body (2) includes a supporting part (24, 25, 250) coupled to a rear end thereof;
the collector (9) is detachably supported by the supporting part (24, 25, 250);
the lifting part (65) lifts and moves the supporting part(24, 25, 250), to thereby lift and move the collector (9) to the discharge position; and
the holding member (400) couples a mower main body portion (2) of the mower main body other than the supporting part (24, 25, 250) and the supporting part (24, 25, 250) to each other, to thereby hold the collector (9) at the holding position.

3. The mower according to Claim 2, wherein:
the holding member (400) is a member having a stiffness property, and includes an engagement part;
one end of the holding member (400) is tumably coupled to one of the mower main body portion and the supporting part (24,25,250) ; and
an engaged part (800) to be engaged with the engagement part (400) is formed in another one of the mower main body portion and the supporting part (24,25,250).

4. The mower according to Claim 3, wherein:
the holding member is a bar-like member which is long in a front-back direction, and has an elongated hole (430) which is formed along a longitudinal direction thereof;
the engagement part has a holding hole (431) which is formed between both edges of the elongated hole (430) so as to be connected with the elongated hole (430);
the holding member (400) moves so that the engaged part (800) slides along the elongated hole (430), as the collector (9) is lifted from the grass collecting position to the discharge position; and
the collector (9) is held at the holding position by placing the engaged part (800) in the holding hole (431).

5. The mower according to Claim 3 or 4, wherein the holding member (400) includes a handle part (420) provided at another end thereof.

6. The mower according to any one of Claims 2 to 5, wherein:
the collector (9) includes an opening part (G) through which the grass comes in and out;
the grass collecting position is a position at which the opening part (G) is substantially perpendicular to a ground;
the discharge position is a position at which the opening part (G) is substantially parallel to the ground;
the holding position is a position at which the opening part (G) is inclined to the ground by a predetermined amount decided by the holding member; and
the supporting part (24, 25, 250) is lifted and turned by the lifting part (65) about a horizontal axis of the mower main body portion while supporting the collector (9).

7. A method of detaching a collector (9) of a mower, in which the collector (9) is detached from the mower,
the mower, comprising:
a fixing mechanism (47, 48, 50) which fixes the collector (9) to a grass collecting position for collecting grass, when the grass is mowed;
a fixing releasing mechanism (30, 32, 31, 41, 51b, 51 a, 55, 54, 49, 56, 57, 58, 59, 60) which releases the fixing;
a lifting part (65) which lifts the collector (9) from the grass collecting position to a discharge position for discharging the collected grass, when the fixing is released; and
a holding member (400) which is capable of holding, against the lifting, the collector (9) at a holding position in a vicinity of the grass collecting position, when the fixing is released,
the collector being configured to be detachable from a rear part of a mower main body (2) in a state where the collector (9) is at the holding position, and
the method of detaching the collector of the mower, comprising:
a fixing releasing step of releasing the fixing;
a holding step of setting the holding member; and
a detaching step of detaching the collector from the mower main body.

## Patentansprüche

1. Rasenmäher, der einen Mäher-Hauptkörper (2) und einen Auffangbehälter (9) aufweist, der abnehmbar an einem hinteren Teil des Mäher-Hauptkörpers (2) vorhanden ist und in dem gemähtes Gras aufgefangen wird, wobei er umfasst:
einen Befestigungsmechanismus (47, 58, 60), mit dem der Auffangbehälter (9) an einer Gras-Auffangposition zum Auffangen des Grases befestigt ist, wenn das Gras gemäht wird;
einen Befestigungs-Lösemechanismus (30, 32, 31, 41, 51 b, 51 a, 55, 54, 49, 56, 57, 58, 59, 60), mit dem die Befestigung gelöst wird;
einen Hebeteil (65), mit dem der Auffangbehälter (9) von der Gras-Auffangposition an eine Ausschüttposition zum Ausschütten des aufgefangenen Grases gehoben wird, wenn die Befestigung gelöst ist; und
**dadurch gekennzeichnet, dass** der Rasenmäher des Weiteren umfasst:
ein Halteelement (400), das in der Lage ist, den Auffangbehälter (9) gegen das Heben an einer Halteposition in der Nähe der Grasauffangposition zu halten, wenn die Befestigung gelöst ist,
wobei der Auffangbehälter (9) so eingerichtet ist, dass er von dem hinteren Teil des Mäher-Hauptkörpers (2) in einem Zustand abgenommen werden kann, in dem sich der Auffangbehälter (9) an der Halteposition befindet.

2. Rasenmäher nach Anspruch 1, wobei:
der Mäher-Hauptkörper (2) einen Trageteil (24, 25, 250) enthält, der mit einem hinteren Ende desselben gekoppelt ist;
der Auffangbehälter (9) abnehmbar von dem Trageteil (24, 25, 250) getragen wird;
der Hebeteil (65) den Trageteil (24, 25, 250) hebt und bewegt, um so den Auffangbehälter (9) an die Ausschüttposition anzuheben und zu bewegen; und
das Halteelement (400) einen anderen Mäher-Hauptkörperabschnitt (2) des Mäher-Hauptkörpers als den Trageteil (6) und den Trageteil (24, 25, 250) miteinander verbindet, um so den Auffangbehälter (9) an der Halteposition zu halten.

3. Mäher nach Anspruch 2, wobei:
das Halteelement (400) ein Element ist, das Steifigkeit aufweist und das einen aktiven Eingriffsteil enthält;
ein Ende des Halteelementes (400) drehbar mit dem Mäher-Hauptkörperabschnitt oder dem Trageteil (24, 25, 250) gekoppelt ist; und
ein passiver Eingriffsteil (800), der mit dem aktiven Eingriffsteil (400) in Eingriff zu bringen ist, in dem anderen Teil von dem Mäher-Hauptkörperabschnitt und dem Trageteil (24, 25, 250) ausgebildet ist.

4. Rasenmäher nach Anspruch 3, wobei:
das Halteelement ein stangenförmiges Element ist, das in einer Vorn-Hinten-Richtung lang ist und ein Langloch (430) hat, das in seiner Längsrichtung ausgebildet ist;
der aktive Eingriffsteil ein Halteloch (431) hat, das zwischen beiden Rändern des Langlochs (430) so ausgebildet ist, dass es mit dem Langloch (430) verbunden ist;
sich das Halteelement (400) so bewegt, dass der passive Eingriffsteil (800) in dem Langloch (430) gleitet, wenn der Auffangbehälter (9) von der Grasauffang-Position an die Ausschüttposition gehoben wird; und
der Auffangbehälter (9) an der Halteposition gehalten wird, indem der passive Eingriffsteil (800) in dem Halteloch (431) positioniert wird.

5. Rasenmäher nach Anspruch 3 oder 4, wobei das Halteelement (400) einen Griffteil (420) enthält, der an einem anderen Ende desselben vorhanden ist.

6. Rasenmäher nach einem der Ansprüche 2 bis 5, wobei:
der Auffangbehälter (9) einen Öffnungsteil (G) enthält, über den das Gras hinein- und hinausgelangt;
die Grasauffang-Position eine Position ist, der der Öffnungsteil (G) im Wesentlichen senkrecht zu einem Boden ist;
die Ausschütt-Position eine Position ist, in der der Öffnungsteil (G) im Wesentlichen parallel zu dem Boden ist;
die Halte-Position eine Position ist, in der der Öffnungsteil (G) um ein vorgegebenes, durch das Halteelement bestimmtes Maß, zu dem Boden geneigt ist; und
der Trageteil (24, 25, 250) durch den Hebeteil (65) angehoben und um eine horizontale Achse des Mäher-Hauptkörperabschnitts herum gedreht wird, während er den Auffangbehälter (9) trägt.

7. Verfahren zum Abnehmen eines Auffangbehälters (9) eines Rasenmähers, bei dem der Auffangbehälter (9) von dem Rasenmäher abgenommen wird, wobei der Rasenmäher umfasst:
einen Befestigungsmechanismus (47, 58, 60), mit dem der Auffangbehälter (9) an einer Gras-Auffangposition zum Auffangen des Grases befestigt ist, wenn das Gras gemäht wird;
einen Befestigungs-Lösemechanismus (30, 32, 31, 41, 51 b, 51 a, 55, 54, 49, 56, 57, 58, 59, 60), mit dem die Befestigung gelöst wird;
einen Hebeteil (65), mit dem der Auffangbehälter (9) von der Gras-Auffangposition an eine Ausschüttposition zum Ausschütten des aufgefangenen Grases gehoben wird, wenn die Befestigung gelöst ist; und
**dadurch gekennzeichnet, dass** der Rasenmäher des Weiteren umfasst:
ein Halteelement (400), das in der Lage ist, den Auffangbehälter (9) gegen das Heben an einer Halteposition in der Nähe der Grasauffangposition zu halten, wenn die Befestigung gelöst ist,
und der Auffangbehälter (9) so eingerichtet ist, dass er von einem hinteren Teil eines Mäher-Hauptkörpers (2) in einem Zustand abgenommen werden kann, in dem sich der Auffangbehälter (9) an der Halteposition befindet, und
das Verfahren zum Abnehmen des Auffangbehälters des Rasenmähers umfasst:
einen Schritt zum Lösen der Befestigung, in dem die Befestigung gelöst wird;
einen Halteschritt, in dem das Halteelement eingestellt wird; und
einen Schritt zum Abnehmen, in dem der Auffangbehälter von dem Mäher-Hauptkörper abgenommen wird.

## Revendications

1. Tondeuse comportant un corps principal de tondeuse (2) et un bac de ramassage (9) qui est pourvu de manière détachable sur une partie arrière du corps principal de tondeuse (2) et dans lequel de l'herbe tondue est ramassée, comprenant :
un mécanisme de fixation (47, 48, 50) qui fixe le bac de ramassage (9) dans une position de ramassage d'herbe pour ramasser l'herbe lorsque de l'herbe est tondue ;
un mécanisme de libération de fixation (30, 32, 31, 41, 51b, 51a, 55, 54, 49, 56, 57, 58, 59, 60) qui libère la fixation ;
un élément de levage (65) qui relève le bac de ramassage (9) depuis la position de ramassage d'herbe jusqu'à une position de déversement pour déverser l'herbe ramassée, lorsque la fixation est libérée ; et
**caractérisée en ce que** la tondeuse comprend en outre
un élément de maintien (400) capable de maintenir le bac de ramassage (9) de manière à éviter son levage, dans une position de maintien adjacente à la position de ramassage d'herbe, lorsque la fixation est libérée,
dans laquelle le bac de ramassage (9) est configuré pour être détachable de la partie arrière du corps principal de la tondeuse (2) dans un état où le bac de ramassage (9) se trouve dans la position de maintien.

2. Tondeuse selon la revendication 1, dans laquelle :
le corps principal de la tondeuse (2) comprend une pièce de support (24, 25, 250) couplée à une extrémité arrière dudit corps ;
le bac de ramassage (9) est supporté de manière détachable par la pièce de support (24, 25, 250) ;
l'élément de levage (65) lève et déplace la pièce de support (24, 25, 250) pour ainsi lever et déplacer le bac de ramassage (9) jusqu'à la position de déversement ; et
l'élément de maintien (400) couple à la pièce de support (24, 25, 250) une partie (2) du corps principal de la tondeuse autre que la pièce de support (24, 25, 250), pour ainsi maintenir le bac de ramassage (9) dans la position de maintien.

3. Tondeuse selon la revendication 2, dans laquelle :
l'élément de maintien (400) est un élément présentant une propriété de rigidité et comprend une pièce d'engagement ;
une extrémité de l'élément de maintien (400) est couplée de manière pivotante à un élément parmi la partie de corps principal de la tondeuse et la pièce de support (24, 25, 250) ; et
une pièce engagée (800) à engager avec la pièce d'engagement (400) est formée dans un autre élément parmi la partie de corps principal de la tondeuse et la pièce de support (24, 25, 250).

4. Tondeuse selon la revendication 3, dans laquelle :
l'élément de maintien est un élément en forme de barre qui est allongé selon une direction allant de l'avant à l'arrière, et présente un trou allongé (430) formé selon sa direction longitudinale,
la pièce d'engagement présente un trou de maintien (431) formé entre les deux bords du trou allongé (430) de manière à être connecté avec le trou allongé (430) ;
l'élément de maintien (400) se déplace de telle sorte que la pièce engagée (800) glisse le long du trou allongé (430), au fur et à mesure que le bac de ramassage (9) est relevé depuis la position de ramassage d'herbe vers la position de déversement ; et
le bac de ramassage (9) est maintenu dans la position de maintien en plaçant la pièce engagée (800) dans le trou de maintien (431).

5. Tondeuse selon la revendication 3 ou 4, dans laquelle l'élément de maintien (400) comprend une pièce de poignée (420) pourvue à une autre extrémité dudit élément.

6. Tondeuse selon l'une quelconque des revendications 2 à 5, dans laquelle :
le bac de ramassage (9) comprend une pièce d'ouverture (G) à travers laquelle l'herbe entre et sort ;
la position de ramassage d'herbe est une position dans laquelle la pièce d'ouverture (G) est essentiellement perpendiculaire au sol ;
la position de déversement est une position dans laquelle la pièce d'ouverture (G) est essentiellement parallèle au sol ;
la position de maintien est une position dans laquelle la pièce d'ouverture (G) est inclinée vers le sol d'une quantité prédéterminée définie par l'élément de maintien, et
la pièce de support (24, 25, 250) est relevée et pivotée par l'élément de levage (65) autour d'un axe horizontal de la partie du corps principal de la tondeuse tout en supportant le bac de ramassage (9).

7. Procédé de détachement d'un bac de ramassage (9) de tondeuse, dans lequel le bac de ramassage (9) est détaché de la tondeuse,
la tondeuse comprenant :
un mécanisme de fixation (47, 48, 50) qui fixe le bac de ramassage (9) dans une position de ramassage d'herbe pour ramasser de l'herbe, lorsque l'herbe est tondue ;
un mécanisme de libération de fixation (30, 32, 31, 41, 51b, 51a, 55, 54, 49, 56, 57, 58, 59, 60) qui libère la fixation ;
un élément de levage (65) qui relève le bac de ramassage (9) depuis la position de ramassage d'herbe jusqu'à une position de déversement pour déverser l'herbe ramassée, lorsque la fixation est libérée ; et
un élément de maintien (400) capable de maintenir le bac de ramassage (9) de manière à éviter son levage, dans une position de maintien adjacente à la position de ramassage d'herbe, lorsque la fixation est libérée,
le bac de ramassage étant configuré pour être détachable de la partie arrière d'un corps principal de tondeuse (2) dans un état où le bac de ramassage (9) se trouve dans la position de maintien, et
le procédé de détachement du bac de ramassage de la tondeuse comprenant :
une étape de libération de fixation consistant à libérer la fixation ;
une étape de maintien consistant à établir l'élément de maintien, et
une étape de détachement consistant à détacher le bac de ramassage du corps principal de la tondeuse.
